# EUROPÄISCHE PATENTANMELDUNG

(11) **EP 1 906 545 A2**
(43) Veröffentlichungstag der Anmeldung: **02.04.2008**
(21) Anmeldenummer: 07017493.3
(22) Anmeldetag: 06.09.2007
(51) Int. Cl.: H04B 3/30

(54) **Verfahren zum Übertragen eines digitalen Sendesignals, Datenkommunikationssender, Datenkommunikationsempfänger und Datenkommunikationssystem**

(30) Priorität: 28.09.2006 DE 102006045901
(71) Anmelder: Infineon Technologies AG, 85579 Neubiberg (DE)
(72) Erfinder: Schenk, Heinrich, 81476 München (DE); Stolle, Reinhard, 82041 Oberhaching (DE); Traeber, Mario, 82041 Deisenhofen (DE)
(74) Vertreter: Schenk, Markus

(57) **Zusammenfassung**

Zur Datenübertragung über ein Datenkommunikationssystem wird ein erstes elektrischen Signal auf einem ersten elektrischen Leiter (118a) des Datenkommunikationssystems und ein zweites elektrisches Signal auf einem zweiten elektrischen Leiter (118b) des Datenkommunikationssystems erzeugt, wobei die Common-Mode-Spannung des ersten und zweiten elektrischen Signals abhängig von einem ersten digitalen Sendesignal ist. Die ersten und zweiten elektrischen Signale werden über den ersten und zweiten elektrischen Leiter übertragen und ein erstes digitalen Empfangssignals basierend auf einer erfassten Common-Mode-Spannung des ersten und zweiten elektrischen Signals erzeugt.

## Beschreibung

Datenkommunikationssysteme, wie beispielsweise Datenkommunikationssysteme, die über vorhandene Telefonleitungsnetze Daten übertragen, werden zunehmend für die Übertragung breitbandiger Datenströme, beispielsweise für einen schnellen Internet-Zugang (ADSL) oder digitales Fernsehen (VDSL) benützt. Typischerweise hängt dabei die maximale mögliche Datenrate von der Leitungslänge ab sowie der Frequenz der Datensignale ab, wobei die Leitungsdämpfung mit zunehmender Leitungslänge und zunehmender Frequenz ansteigt. Grundsätzlich gibt es jedoch für Datenübertragungsleitungen eine maximale Datenrate, die nicht überschritten werden kann, wobei sich die maximale Datenrate gemäß dem bekannten Shannon-Theorem ergibt. Eine weitere Steigerung der Datenrate kann bei Erreichen der maximalen Datenrate nur durch Steigerung der Übertragungsbandbreite erfolgen.

Die Aufgabe der vorliegenden Erfindung besteht darin, ein Konzept zu schaffen, das eine Steigerung der Datenrate ermöglicht.

Diese Aufgabe wird durch ein Verfahren gemäß Anspruch 1, einen Datenkommunikationssender gemäß Anspruch 18, einen Datenkommunikationsempfänger gemäß Anspruch 32 und ein Datenkommunikationssystem gemäß Anspruch 44 gelöst.

Gemäß Ausführungsbeispielen der vorliegenden Erfindung wird ein erstes und zweites elektrisches Signal auf einem ersten bzw. zweiten elektrischen Leiter eines Datenkommunikationssystems erzeugt. Die elektrischen Signale werden derart erzeugt, dass eine Common-Mode-Spannung (Gleichtaktspannung) des ersten und zweiten elektrischen Signals von einem digitalen Sendesignal abhängig ist. Das erste und zweite elektrische Signal werden über die elektrischen Leiter übertragen, wobei empfangsseitig ein digitales Empfangssignal basierend auf einer erfassten Common-Mode-Spannung des ersten und zweiten elektrischen Signals erzeugt wird.

Ausführungsbeispiele der vorliegenden Erfindung verwenden somit einen Common-Mode-Datenübertragungskanal, bei dem Daten auf eine Common-Mode-Spannung zwischen zwei elektrischen Leitern moduliert werden. Durch das Modulieren der Daten auf die Common-Mode-Spannung des ersten und zweiten elektrischen Signals kann bei einem Ausführungsbeispiel zusätzlich zu einem Differenzschaltungskanal, bei dem Daten eines zweiten Datensendesignals als Differenzsignal der beiden Leiter übertragen werden für die Übertragung von digitalen Daten ein weiterer Kanal verwendet werden, so dass eine bessere Ausnützung von elektrischen Leitungen zur Datenübertragung ermöglicht und die Bandbreite gesteigert werden kann.

Bei einem Ausführungsbeispiel ist vorgesehen, dass ein Differenzschaltungskanal in entgegengesetzter Richtung zu dem Common-Mode-Kanal implementiert ist, d.h. ein Differenzsignal zwischen dem ersten und zweiten Leiter wird in eine Richtung übertragen, die entgegengesetzt zu der Übertragungsrichtung des ersten und zweiten Signals ist. Daher wird bei diesem Ausführungsbeispiel ein drittes und viertes elektrisches Signal, deren Differenzspannung abhängig von einem dritten digitalen Sendesignal ist, auf dem ersten und zweiten elektrischen Leiter in einer Übertragungsrichtung übertragen, die entgegengesetzt zu der Übertragungsrichtung des ersten und zweiten Signals ist.

Bei einem Ausführungsbeispiel können die in die entgegengesetzte Übertragungsrichtung übertragenen Signale so erzeugt werden, dass auch hier eine Common-Mode-Spannung des ersten und zweiten Leiters von einem weiteren, vierten digitalen Sendesignal abhängig ist. Bei diesem Ausführungsbeispiel können somit sowohl in eine Übertragungsrichtung als auch in die entgegengesetzte Übertragungsrichtung Datensignale sowohl über eine Differenzschaltung der beiden elektrischen Leiter, als auch über die Common-Mode-Verschaltung der elektrischen Leiter übertragen werden. Mit anderen Worten ist bei diesem Ausführungsbeispiel eine Voll-Duplex-Übertragung sowohl über einen Differenzschaltungskanal als auch über einen Common-Mode-Kanal ermöglicht.

Bei einem Ausführungsbeispiel der vorliegenden Erfindung werden zusätzlich zu dem ersten und zweiten Leiter, die eine erste Leitung bilden, weitere elektrische Leiter, beispielsweise ein dritter und vierter elektrischer Leiter, die eine zweite Leitung bilden, verwendet, um die Common-Mode-Spannung sowohl des ersten und zweiten elektrischen Leiters als auch des dritten und vierten elektrischen Leiters abhängig von einem einzigen gemeinsamen digitalen Sendesignal zu erzeugen. Durch die Übertragung der Daten in dem Common-Mode-Kanal nicht nur über die beiden Leiter der ersten Leitung sondern auch über die beiden Leiter der zweiten Leitung wird eine Rückführung des Common-Mode-Signals über eine Masseleitung vermieden. Die Verschaltung zweier Leitungen zur Übertragung von Signalen kann hierbei auch als Phantomkreisschaltung bezeichnet werden. Bei einem Ausführungsbeispiel repräsentiert die Differenz einer ersten Common-Mode-Spannung, die dem ersten und zweiten Leiter zugeordnet ist, und einer zweiten Common-Mode-Spannung, die dem dritten und vierten Leiter zugeordnet ist, das digitale Sendesignal.

Bei einem Ausführungsbeispiel stellt das Datenkommunikationssystem ein xDSL-Datenkommunikationssystem dar, wobei x einen Platzhalter für die verschiedenen DSL-Übertragungstechniken, wie beispielsweise ADSL, VDSL, HDSL etc., darstellt. Bei einem weiteren Ausführungsbeispiel stellt das Datenkommunikationssystem ein LAN-Datenkommunikationssystem (LAN = Local Area Network) dar, wobei die Möglichkeiten der Nutzung des Common-Mode-Kanals zur Datenübertragung nicht auf diese Datenkommunikationssysteme beschränkt sind sondern prinzipiell auf Datenübertragungsleitungen mit mehreren Leitern anwendbar ist.

Bei einem Ausführungsbeispiel wird das elektrische Signal unter Verwendung eines Codierens zu Symbolen in einem Frequenzbereich und eines nachfolgenden Umwandelns der Frequenzbereich-Symbole in ein Zeitsignal erzeugt. Bei einem Ausführungsbeispiel wird als Leitungs-Codier-Technik diskrete Mehrfrequenzverfahren, wie beispielsweise eine DMT-Technik (DMT = discrete multiton modulation) verwendet.

Bei einem Ausführungsbeispiel wird die Common-Mode-Spannung des ersten und zweiten Leiters mittels eines Spannungsteilers aus einem ersten und zweiten komplexen Widerstand (komplexe Impedanz), die den jeweiligen elektrischen Leitern zugeordnet sind, oder einem komplexen Widerstandsnetzwerk erzeugt. Bei einem Ausführungsbeispiel kann der Spannungsteiler oder das Widerstandsnetzwerk einen Kondensator aufweisen, der so verschaltet ist, das ein Gleichstrompfad über den Spannungsteiler unterbunden ist. Das heißt, die beiden elektrischen Leiter zur Datenübertragung bleiben auch bei Verwendung der Koppelschaltung zum Einspeisen der Common-Mode-Sendesignal galvanisch getrennt, was beispielsweise das Einspeisen eines Speisestroms zur Energieversorgung ermöglicht. In entsprechender Weise kann auch der Empfangsseite das Abgreifen der Common-Mode-Spannung mittels komplexer Widerstände erfolgen. Bei einem Ausführungsbeispiel kann der komplexe Widerstand auch ein rein Ohmscher Widerstand sein.

Das digitale Sendesignal kann eine Bandbreite von mehr als 100 kBit/s aufweisen, wobei bei anderen Ausführungsbeispielen auch Bandbreiten größer als 1MBit/s oder größer als 10 Megabit pro Sekunde oder im Bereich von GBit/s vorgesehen sind.

Zur Aufteilung der Daten auf den oder die gebildeten Common-Mode-Kanäle und Differenzschaltungskanäle können bekannte Verfahren verwendet werden.

Bei Ausführungsbeispielen der vorliegenden Erfindung kann ferner ein Kompensieren von Störungen durchgeführt werden, um ein Übersprechen von anderen Leitern des Datenkommunikationssystems auf die ersten und die zweiten elektrischen Leiter zu kompensieren.

Gemäß einem Ausführungsbeispiel der vorliegenden Erfindung weist ein Datenkommunikationssender eines Datenkommunikationssystems einen ersten Eingang zum Empfangen eines ersten Sendesignals, das auf einem ersten digitalen Signal basiert, und einen ersten Anschluss auf, der mit dem ersten elektrischen Leiter des Datenkommunikationssystems koppelbar ist, um ein erstes elektrisches Signal auf dem ersten elektrischen Leiter auszugeben. Der Datenkommunikationssender weist ferner einen zweiten Anschluss auf, der mit dem zweiten elektrischen Leiter des Datenkommunikationssystems koppelbar ist, um ein zweites elektrisches Signal auf dem zweiten elektrischen Leiter auszugeben. Bei dem Datenkommunikationssender ist ferner eine Koppelschaltung vorgesehen, die mit dem ersten Eingang verkoppelt ist, um das auf einem digitalen Signal basierende Sendesignal zu empfangen und mit dem ersten und zweiten Anschluss verkoppelt ist, um das erste und zweite elektrische Signal an dem ersten und zweiten Anschluss mit einer Common-Mode-Spannung zu erzeugen, die abhängig von dem ersten Sendesignal ist.

Der Datenkommunikationssender kann einen Digital-Analog-Wandler aufweisen, der das erste digitale Signal in ein analoges erstes Sendesignal umwandelt.

Eine Koppelschaltung zum Einspeisen der Common-Mode-Spannung kann bei einem Ausführungsbeispiel eine Reihenschaltung mit einem ersten komplexen Widerstand, der mit dem ersten Anschluss verschaltet ist, und einem zweiten komplexen Widerstand, der mit dem zweiten Anschluss verschaltet ist, aufweisen. Wie bereits oben erwähnt wurde, kann die Reihenschaltung Ohmsche Widerstände aufweisen, die in einer Spannungsteilerschaltung angeordnet sind, oder auch komplexe Widerstände (komplexe Impedanzen) umfassen, die induktive oder kapazitive Bauelemente aufweisen.

Der Anschluss zum Einspeisen der Common-Mode-Spannung kann bei Ausführungsbeispielen der vorliegenden Erfindung ein Anschluss zwischen dem ersten und zweiten komplexen Widerstand sein.

Zum Einspeisen der Common-Mode-Spannung kann auch ein Übertrager bzw. Transformator verwendet werden, der eine erste Spule (Primärspule) und eine zweite Spule (Sekundärspule) mit einem ersten und zweiten Außenanschluss umfasst, wobei der erste Außenanschluss der zweiten Spule mit dem ersten Anschluss und der zweite Außenanschluss der zweiten Spule mit dem zweiten Außenanschluss verschaltet ist, wobei die zweite Spule parallel mit der Reihenschaltung verschaltet ist, die einen Spannungsteiler zum Einspeisen der Common-Mode-Spannung aufweist.

Die Einspeisung der Common-Mode-Spannung kann auch über einen Übertrager erfolgen, der eine zweite Spule mit Mittelanschluss aufweist, wobei der Mittelanschluss den Anschluss zum Einspeisen der Common-Mode-Spannung darstellt. Das Einspeisen der Common-Mode-Spannung kann gemäß einem Ausführungsbeispiel auch mittels eines Übertragers erfolgen, bei dem die zweite Spule zwei Teilspulen aufweist, die über einen Kondensator miteinander verkoppelt sind.

Bei einem Ausführungsbeispiel kann das Einspeisen der Common-Mode-Spannung derart erfolgen, dass eine galvanische Trennung der beiden Leiter bestehen bleibt, so dass eine Gleichstromversorgung der elektrischen Leiter mit einem Fernspeisungsstrom möglich ist.

Wie bereits oben erwähnt wurde, können beliebig viele weitere Leitungen verwendet werden, um Daten sowohl über Differenzschaltungskanäle als auch über Common-Mode-Kanäle zu übertragen. Bei Ausführungsbeispielen der vorliegenden Erfindung weist der Datenkommunikationssender daher weitere Eingänge auf, um weitere Sendesignale, die auf digitalen Signalen basieren, zu empfangen und Differenzspannungen auf den elektrischen Leitern und/oder Common-Mode-Spannungen auf den elektrischen Leitern abhängig von den weiteren Sendesignalen zu erzeugen.

Bei einem Ausführungsbeispiel der vorliegenden Erfindung weist ein Datenkommunikationsempfänger des Datenkommunikationssystems einen ersten Anschluss auf, um den Datenkommunikationsempfänger mit einem ersten elektrischen Leiter des Datenkommunikationssystems zu verkoppeln. Der Datenkommunikationsempfänger weist ferner einen zweiten Anschluss zum Verkoppeln mit einem zweiten elektrischen Leiter des Datenkommunikationssystems auf. Eine erste Schaltung ist vorgesehen, um eine Common-Mode-Spannung an dem ersten und zweiten Anschluss abzugreifen, wobei ferner ein Wandler mit der ersten Schaltung verkoppelt ist, um ein digitales Empfangssignal basierend auf der abgegriffenen Common-Mode-Spannung zu erzeugen.

Bei einem Ausführungsbeispiel ist zusätzlich zu der ersten Schaltung eine zweite Schaltung vorgesehen, um ein Differenzspannungssignal zwischen dem ersten und zweiten elektrischen Leiter abzugreifen, wobei der Wandler ferner mit der zweiten Schaltung verkoppelt, um ein zweites digitales Empfangssignal basierend auf dem Differenzspannungssignal zwischen dem ersten und zweiten elektrischen Leiter zu erzeugen.

Bei weiteren Ausführungsbeispielen kann der Datenkommunikationsempfänger weitere Anschlüsse aufweisen, um weitere elektrische Signale, die über weitere elektrische Leiter des Datenkommunikationssystems übertragen werden, zu empfangen. Entsprechende weitere Schaltungen sind vorgesehen, um eine Differenzspannung zwischen jeweils zwei elektrischen Leitern und/oder eine Common-Mode-Spannung zwischen zwei elektrischen Leitern abzugreifen. Der Wandler ist dabei mit den weiteren Schaltungen verkoppelt, um jeweilige digitale Empfangssignale basierend auf den anliegenden Differenzspannungen bzw. anliegenden Common-Mode-Spannungen zu erzeugen.

Der Datenkommunikationsempfänger kann bei einem Ausführungsbeispiel ein xDSL-Empfänger sein. Bei einem weiteren Ausführungsbeispiel kann der Datenkommunikationsempfänger ein Ethernet-Empfänger oder ein LAN-Empfänger (LAN = Local Area Network) sein. Entsprechend zu der Einspeisschaltung bei einem Sender kann die Schaltung zum Abgreifen der Common-Mode-Spannung eine Reihenschaltung aus komplexen Widerständen aufweisen. Die Reihenschaltung aus komplexen Widerständen kann auch einen Spannungsteiler aufweisen, der aus rein Ohmschen Widerständen besteht. Ein Abgriffpunkt zum Abgreifen der Common-Mode-Spannung kann ein Anschluss bzw. Knoten zwischen komplexen Widerständen der Reihenschaltung sein.

Ebenfalls kann die erste Schaltung einen Transformator aufweisen, der eine erste Spule mit Außenanschlüssen aufweist, die mit den Anschlüssen für die elektrischen Leiter verschaltet ist. Das Abgreifen der Common-Mode-Spannung kann auch an einem Mittel-Anschluss der ersten Spule erfolgen.

Bei einem weiteren Ausführungsbeispiel ist ein Datenkommunikationssystem vorgesehen, bei dem ein erster Datenübertragungskanal durch eine Phantomschaltung eines ersten Paars elektrischer Leiter und eines zweiten Paars elektrischer Leiter gebildet. Das Datenkommunikationssystem weist weitere Datenübertragungskanäle auf, die durch eine Differenzschaltung der jeweiligen Paare von elektrischen Leitern gebildet ist.

Bei einem Ausführungsbeispiel kann das Datenkommunikationssystem an den jeweiligen Enden der elektrischen Leitern des ersten und zweiten Paars aufweisen.

Das Datenkommunikationssystem kann ferner einen Datenübertragungskanal aufweisen, der durch eine Phantomschaltung zweiter Ordnung gebildet ist. Eine Phantomschaltung zweiter Ordnung kann eine Differenzverschaltung einer ersten Phantomschaltung mit Common-Mode-Abgriffen eines weiteren Paars von elektrischen Leitern an den jeweiligen Enden oder eine Differenzschaltung zweier Phantomschaltungen sein. Die Phantomschaltungen können mit zunehmender Leitungsanzahl auch Schaltungen dritter oder höherer Ordnungen aufweisen.

Weitere Ausführungsbeispiele der vorliegenden Erfindung werden in Bezugnahme auf die beiliegenden Figuren erläutert. Es zeigen:
Fig. 1 ein Blockschaltbild eines exemplarischen Ausführungsbeispiels der vorliegenden Erfindung;
Fig. 2 ein Ablaufdiagramm eines exemplarischen Ausführungsbeispiels der vorliegenden Erfindung;
Fig. 3 ein Blockschaltbild gemäß eines exemplarischen Ausführungsbeispiels der vorliegenden Erfindung;
Fig. 4a und 4b Blockschaltbilder zur Erläuterung der Funktion eines Ausführungsbeispiels der vorliegenden Erfindung;
Fig. 5a-5d Blockschaltbilder gemäß weiterer Ausführungsbeispiele der vorliegenden Erfindung;
Fig. 6a-6d Blockschaltbilder gemäß Ausführungsbeispielen der vorliegenden Erfindung;
Fig. 7a und 7b Blockschaltbilder gemäß weiteren Ausführungsbeispielen der vorliegenden Erfindung;
Fig. 8a-8c Blockschaltbilder gemäß Ausführungsbeispielen der vorliegenden Erfindung;
Fig. 9 ein Blockschaltbild gemäß eines Ausführungsbeispieles der vorliegenden Erfindung;
Fig. 10 ein Hierarchie-Diagram von Verschaltungen gemäß Ausführungsbeispielen der vorliegenden Erfindung; und
Fig. 11a-c Hierarchie-Diagramme von Verschaltungen zur Erklärung einer Verschaltungsregel gemäß Ausführungsbeispielen der vorliegenden Erfindung.

In den nachfolgend erläuterten exemplarischen Ausführungsbeispielen sind in den verschiedenen Figuren Elemente, Vorrichtungen, Schaltungsblöcke, etc, die eine gleichartige Struktur oder eine gleichartige Funktion aufweisen, mit gleichen Bezugszeichen bezeichnet.

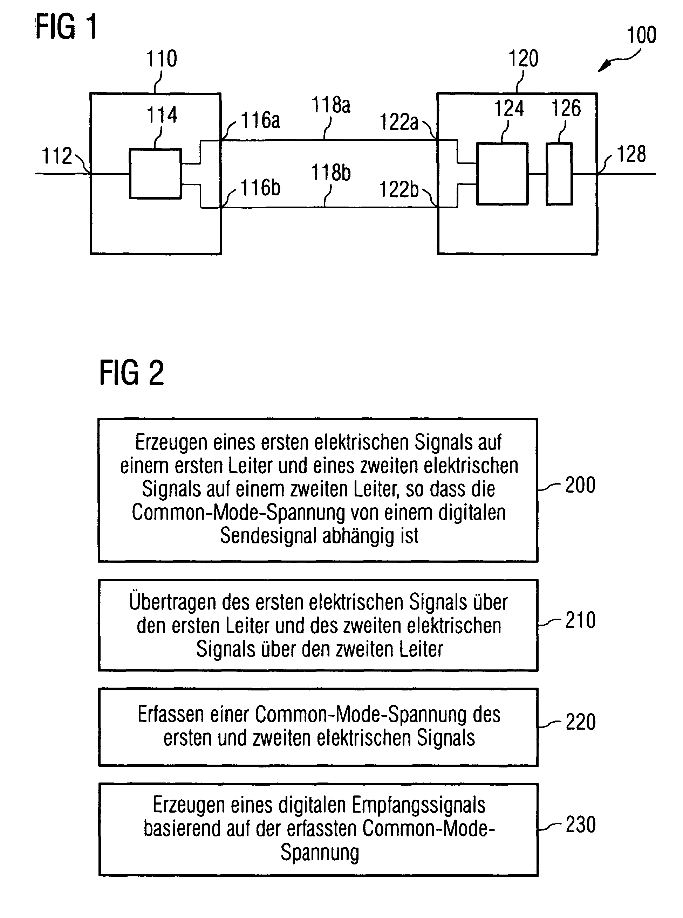

Fig. 1 zeigt ein Datenkommunikationssystem 100 gemäß einem Ausführungsbeispiel der vorliegenden Erfindung. Das Datenkommunikationssystem 100 umfasst einen Datenkommunikationssender 110 und einen Datenkommunikationsempfänger 120. Der Datenkommunikationssender 110 weist einen Eingang 112 auf, um ein Sendesignal zu empfangen, das auf einem digitalen Signal basiert. Das empfangene Sendesignal kann ein analoges Signal sein, welches auf einem digitalen Signal basiert und durch eine Digital-Analog-Wandlung in ein analoges Signal umgewandelt wurde, oder kann selbst ein digitales Signal sein. Der Datenkommunikationssender weist eine Koppelschaltung 114 zum Einspeisen von Signalen auf Leitungen auf. Die Koppelschaltung 114 eingangsseitig mit dem Eingang 112 verbunden ist. Ausgangsseitig ist die Koppelschaltung 114 mit einem ersten Anschluss 116a und einem zweiten Anschluss 116b verschaltet. Die Anschlüsse 116a und 116b sind vorgesehen, um den Datenkommunikationssender 110 mit einem ersten elektrischen Leiter 118a bzw. einem zweiten elektrischen Leiter 118b zu koppeln. Die Leiter 118a und 118b bilden dabei ein Paar von Leitern einer Leitung 118.

Der Datenkommunikationsempfänger 120 weist einen ersten Anschluss 122a auf, der vorgesehen ist, um den Datenkommunikationsempfänger mit dem ersten elektrischen Leiter 118a zu verkoppeln. Der Datenkommunikationsempfänger 120 weist einen zweiten Anschluss 122b auf, der vorgesehen ist, um den Datenkommunikationsempfänger 120 mit dem zweiten elektrischen Leiter 118b zu verkoppeln. Der erste Anschluss 122a und der zweite Anschluss 122b sind jeweils mit einer ersten Schaltung 124 verkoppelt, die vorgesehen ist, um eine Common-Mode-Spannung an dem ersten und zweiten Anschluss abzugreifen. Die erste Schaltung 124 ist mit einem Wandler 126 verkoppelt, um basierend auf der abgegriffenen Common-Mode-Spannung an dem ersten und zweiten Anschluss ein digitales Empfangssignal zu erzeugen. Der Wandler 126 ist mit einem Ausgang 128 verkoppelt, um das erzeugte digitale Empfangssignal auszugeben.

Fig. 2 zeigt ein exemplarisches Ablaufdiagramm eines Betriebs des in Fig. 1 dargestellten Systems.

In einem Schritt 200 wird auf dem ersten Leiter 118a ein erstes elektrisches Signal und auf dem zweiten Leiter 118b ein zweites elektrisches Signal erzeugt, so dass die Common-Mode-Spannung des Paars von Leitern 118a,118b von dem digitalen Sendesignal abhängig ist. In einem Schritt 210 wird das erste elektrische Signal über den ersten Leiter und das zweite elektrische Signal über den zweiten Leiter übertragen. In einem Schritt 220 wird eine Common-Mode-Spannung des ersten und zweiten elektrischen Signals erfasst und in einem Schritt 230 wird ein digitales Empfangssignal basierend auf der erfassten Common-Mode-Spannung erzeugt.

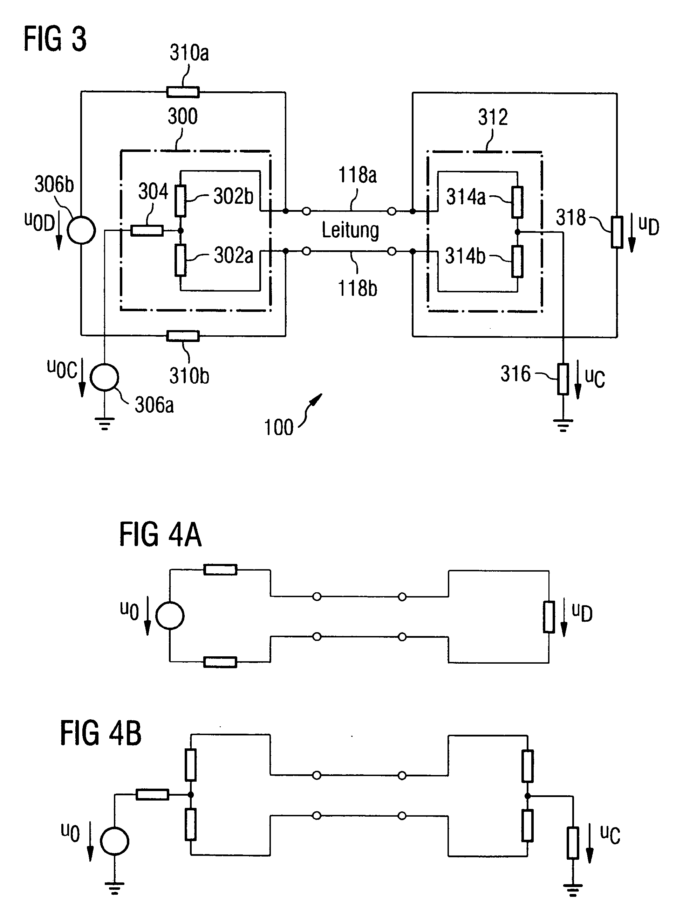

Bei Ausführungsbeispielen der vorliegenden Erfindung, die nunmehr exemplarisch unter Bezugnahme auf die Fig. 3 bis 9 erläutert werden, erfolgt eine Modulation der Datensignale nicht nur bezüglich der Common-Mode-Spannung, sondern es wird eine zusätzliche Übertragung von Daten über die Differenz-Verschaltung der beiden elektrischen Leiter 118a und 118b durchgeführt. Mit anderen Worten gesagt, sind bei den folgenden Ausführungsbeispielen sowohl ein Common-Mode-Datenübertragungskanal als auch ein Differenzsignal bzw. Differenzverschaltungsübertragungskanal

Fig. 3 zeigt ein schematisches Schaltbild eines Systems, bei dem die Common-Mode-Spannung abhängig von einer ersten Spannung U_{0C}, die auf einem ersten digitalen Datenstrom basiert, erzeugt wird, und das Differenzsignal der beiden Leiter 118a und 118b abhängig von einer zweiten Spannung U_{0D}, die auf einem zweiten Datenstrom basiert, erzeugt wird. Das in Fig. 3 dargestellte Datenkommunikationssystem 100 weist eine Koppelschaltung 300 auf, die einen Spannungsteiler mit einem ersten Widerstand 302a und einem zweiten Widerstand 302b aufweist. Ein Knoten zwischen dem Widerstand 302a und dem Widerstand 302b ist über einen Widerstand 304 mit einer Spannungsquelle 306a zum Modulieren der Common-Mode-Spannung verschaltet. Die Widerstände 302a und 302b können gemäß einem Ausführungsbeispiel auch als komplexe Widerstände (komplexer Zweipolelement) oder als komplexes Widerstandsnetzwerk ausgebildet sein. Die Spannungsquelle 306a kann beispielsweise ein Leitungstreiber, wie beispielsweise ein DSL-Leitungstreiber, ein Ethernet-Leitungstreiber oder ein LAN-Leitungstreiber sein. Senderseitig ist ferner eine Spannungsquelle 306b zum Modulieren des Differenzsignals bzw. differenziellen Signals auf den Leitern 118a und 118b mit dem Paar von Leitern verschaltet. Genauer gesagt ist ein erster Ausgang der Spannungsquelle 306b über einen ersten Widerstand 310a mit dem Leiter 118a verschaltet und ein zweiter Ausgang der Spannungsquelle 306b über einen zweiten Widerstand 310b mit dem Leiter 118b verschaltet. Empfangsseitig sind die Leiter 118a und 118b mit einer Schaltung 312 verschaltet, um eine Common-Mode-Spannung an dem ersten Leiter 118a und dem zweiten Leiter 118b abzugreifen. Die Schaltung 312 weist einen zweiten Spannungsteiler auf, der durch Widerstände 314a und 314b gebildet ist, die auch komplexe Widerstände (komplexes Zweipolelement) oder ein komplexes Widerstandsnetzwerk sein können. Ein Knoten zwischen den beiden Widerständen 314a und 314b ist mit einem Widerstand 316 mit einem Bezugspotential, beispielsweise Massepotential verschaltet. An dem Widerstand 316 ist somit ein Signal abgreifbar, das die Common-Mode-Spannung des ersten und zweiten elektrischen Leiters 118a und 118b repräsentiert.

Zum Abgreifen der differentiellen Spannung der Leiter 118a und 118b sind dieselben mit einem weiteren Widerstand 318 verschaltet.

Das in Fig. 3 gezeigte Datenkommunikationssystem stellt somit eine Kombination einer Datenübertragungstechnik auf der Basis einer Differenzverschaltung und einer Datenübertragungstechnik auf der Basis einer Common-Mode-Verschaltung dar, die in Fig. 4a und 4b exemplarisch getrennt dargestellt sind. Fig. 4a zeigt eine Beschaltungsanordnung einer symmetrischen Leitung, bei der auf der Sendeseite das Sendesignal als Differenzspannung auf die Leitung gegeben und auf der Empfangsseite als Differenzspannung zwischen den beiden Leitern bzw. Leitungsadern abgegriffen wird.

Bei dem in Fig. 4b dargestellten Übertragungssystems werden beide Leiter als Hinleiter verwendet und ein Bezugspotential dient als Rückleiter. Am Empfänger erhält man die Summenspannung der beiden Einzelspannungen bezüglich dem Bezugspotential, weshalb diese Übertragungsweise nachfolgend auch als Common-Mode-Übertragung bezeichnet.

Bei dem in Fig. 3 dargestellten Datenkommunikationssystem werden beide in Fig. 4a und Fig. 4b gezeigten Anordnungen gleichzeitig realisiert, so dass mit einer Leitung, die aus den beiden Leitern 118a und 118b gebildet ist, zwei Übertragungskanäle, das heißt ein Differenzsignal-Kanal bzw. Differenzverschaltungskanal und ein Common-Mode-Übertragungskanal gebildet sind. Die beiden Übertragungskanäle beeinflussen sich gegenseitig nicht, so dass die beiden Kanäle orthogonal sind.

Beide in Fig. 3 dargestellten Schaltungen 300 bzw. 312 bewirken eine sendeseitige und empfangsseitige galvanische oder, bei Verwendung von komplexen Widerständen und/oder Übertragern auch eine nicht-galvanische Kopplung der Datenkommunikationssender bzw. Datenkommunikationsempfänger mit den jeweiligen Leitern 118a bzw. 118b. Bei weiteren Ausführungsbeispielen kann die Ankopplung und Auskopplung des Common-Mode-Signals nicht-galvanisch durch einen Übertrager bzw. Transformator erfolgen, der an der leitungsseitigen Übertragerwicklung eine Mittelanschluss bzw. Mittelanzapfung aufweist, um das Common-Mode-Signal an dem Mittelanschluss einzuspeisen bzw. abzugreifen.

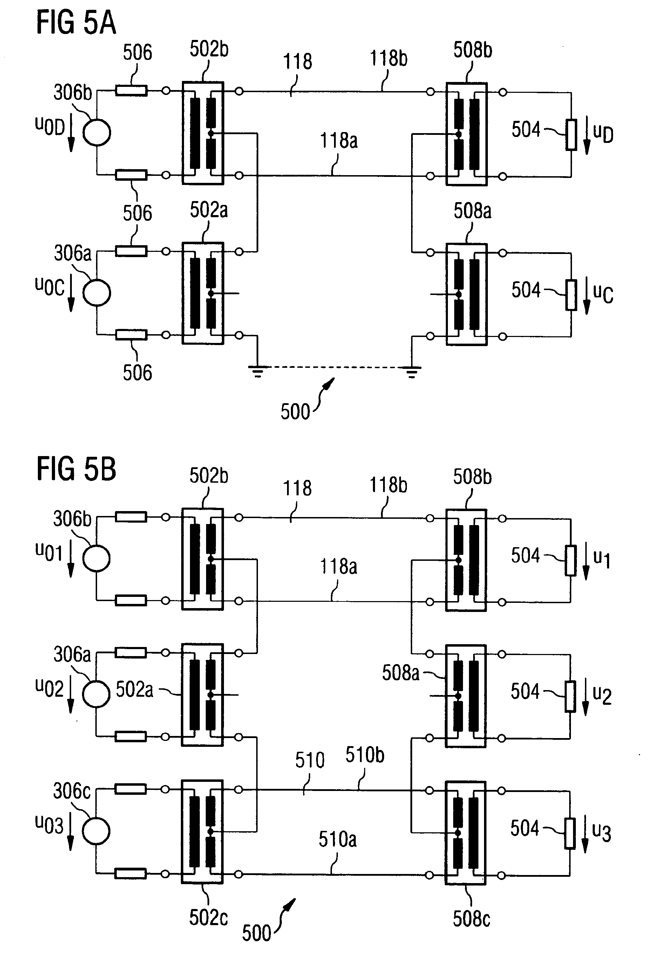

Ein exemplarisches Ausführungsbeispiel eines Datenkommunikationssystems, bei dem die Koppelschaltung einen Übertrager aufweist, ist in Fig. 5a dargestellt. Fig. 5a zeigt ein Datenkommunikationssystem 500, bei dem senderseitig ein erster Übertrager 502a und ein zweiter Übertrager 502b vorgesehen sind. Der Übertrager 502a weist eine erste Spule bzw. Primärspule auf, die zwei Außenanschlüsse aufweist, wobei jeder der Außenanschlüsse über jeweils einen Widerstand 506 mit der Spannungsquelle 306a verkoppelt ist, um ein Signal basierend auf einem ersten digitalen Sendesignal zu empfangen. Ferner weist der Übertrager 502a eine zweite Spule bzw. Sekundärspule auf, wobei ein erster Außenanschluss der zweiten Spule mit einem Bezugspotential, d.h. Masse verkoppelt ist. Ein zweiter Außenanschluss der zweiten Spule des Übertragers 502a ist mit einem Mittelanschluss einer zweiten Spule des Übertragers 502b verkoppelt. Entsprechend zu dem Übertrager 502a ist eine erste Spule des Übertragers 502b über Widerstände 506 mit der Spannungsquelle 306b verkoppelt. Empfangsseitig ist ein Übertrager 508a entsprechend dem Übertrager 502a und ein Übertrager 508b entsprechend dem Übertrager 502b mit den Leitern 118a und 118b gekoppelt. Genauer gesagt, ist ein Außenanschluss einer ersten Spule des Übertragers 508a mit dem Bezugspotential verkoppelt, und ein zweiter Außenanschluss der ersten Spule mit einem Mittelanschluss einer ersten Spule des Übertragers 306d verkoppelt. Außenanschlüsse des Übertragers 508b sind mit den Leitern 118a und 118b verkoppelt. Eine zweite Spule des Übertragers 508a ist mit zwei Ausgangsanschlüssen des Übertragers 508a verkoppelt, um an einen Abgreifwiderstand 504 ein Signal anzulegen, welches von der Common-Mode-Spannung der auf den elektrischen Leitern 118a und 118b übertragenen Signale abhängig ist. Das an dem Abgreifwiderstand 504 anliegende Signal wird durch denselben in eine elektrische Spannung U_{c} umgewandelt, die entsprechend von der Common-Mode-Spannung abhängt und als digitales Ausgangssignal ausgegeben werden kann, wobei in dem Fall einer Übertragung eines analogen Signals eine Analog-Digital-Wandlung durchgeführt wird. Außenanschlüsse einer zweiten Spule des Übertragers 508b sind mit einem Abgreifwiderstand zum Auskoppeln eines Differenzsignals der übertragenen Signale verschaltet. Die miteinander verschalteten Übertrager 502a und 502b stellen somit eine Koppelschaltung bzw. Einspeisschaltung zum Einspeisen der Signale auf den Leitern 108a und 108b dar, während die Übertrager 508a und 508b eines Auskoppelschaltung darstellen, die Auskoppeln und Erfassen der Common-Mode-Spannung bzw. der Differenzspannung der Leitern 108a und 108b ermöglicht.

Bei dem in Fig. 5a dargestellten Ausführungsbeispiel wird über das Einspeisen bzw. Auskoppeln von Signalen, die von der Spannungsquelle 306b geliefert werden, eine Übertragung über eine Differenzverschaltung und über das Einspeisen der Signale von der Spannungsquelle 306a an die Mittelanschlüsse der Übertrager 502b und 508b eine Übertragung mittels einer Common-Mode-Verschaltung realisiert, wobei der für die Common-Mode-Verschaltung verwendete zweite Leiter eine Masseleitung ist.

Ein Ausführungsbeispiel, bei dem eine Übertragung von digitalen Daten über eine Common-Mode-Verschaltung ohne Verwendung einer Masseleitung erfolgt, ist in Fig. 5b gezeigt.

Fig. 5b zeigt ein Kommunikationssystem 500, bei dem zusätzlich zu der ersten Leitung 118 mit den Leitern 118a und 118b eine zweite Leitung 510 mit einem Paar von Leitern 510a und 510b zur Datenkommunikation verwendet wird. Die Leitung 118 ist entsprechend zu Fig. 5a über den Übertrager 502b mit der Spannungsquelle 306b verkoppelt, um eine Differenzsignaleinspeisung durchzuführen. In entsprechender Weise wird die Leitung 510 über einen Übertrager 502c mit der Spannungsquelle 306c verkoppelt, um eine Differenzspannungseinspeisung durchzuführen.

Die erste Spule des Übertragers 502a ist entsprechend zu Fig. 5a mit der Spannungsquelle 306a verkoppelt, um eine Common-Mode-Einspeisung durchzuführen. Im Unterschied zu Fig. 5a ist der Außenanschluss der zweiten Spule des Übertragers 502a jedoch nicht mit dem Bezugspotential verkoppelt sondern mit einem Mittelanschluss der zweiten Spule des Übertragers 502c. Dadurch wird das von der Spannungsquelle 306a gelieferte Signal in einer Common-Mode-Übertragungstechnik übertragen, bei der sowohl die Common-Mode-Spannung der ersten Leitung 118 als auch der zweiten Leitung 510 abhängig von dem Signal der Spannungsquelle 306a moduliert wird, wobei die Modulation der Common-Mode-Spannungen der beiden Leitungen 118 und 510 mit gleichem Betrag in jeweils entgegengesetzter Richtung erfolgt. Das heißt, bei dem gezeigten Ausführungsbeispiel wird durch den Mittelanschluss eine symmetrische Modulation der Common-Mode-Spannungen durchgeführt, wobei jedoch bei anderen Ausführungsbeispielen auch unsymmetrische Common-Mode-Modulationen, bei denen der Betrag der Common-Mode-Modulation für die beiden Leitungen unterschiedlich ist, vorgesehen sind.

Entsprechend zu der Senderseite weist die Empfangsseite des in Fig. 5b gezeigten Kommunikationssystems 500 die bereits in Fig. 5a gezeigten Übertrager 508a und 508b und zusätzlich den Übertrager 508c auf. Die Beschaltung der Übertrager 508a-c erfolgt in analoger Weise zu der Beschaltung der empfangsseitigen Übertrager 502a-c. Genauer gesagt sind die Außenanschlüsse von ersten Spulen der Übertrager 508b und 508c jeweils mit den Leitern der Leitung 118 bzw. den Leitern der Leitung 510 gekoppelt, um mittels einer mit der ersten Spule gekoppelten zweiten Spule jeweils ein Signal auszugeben, das dem Differenzsignal der auf den Leitungen übertragenen Signalen entspricht. Diese werden durch jeweils mit den zweiten Spulen der Transformatoren 508b und 508c gekoppelte Abgreifwiderstände 504 in jeweilige Spannungen U1 und U2 umgewandelt, die proportional zu den jeweilig auf den Leitungen übertragenen Differenzsignalen sind. Mittelanschlüsse der ersten Spulen der Übertrager 508b und 508c sind mit Außenanschlüssen der ersten Spule des Übertragers 508a gekoppelt. Daher wird an der zweiten Spule des Übertragers 508a ein Signal erzeugt, das von der Differenz der Common-Mode-Spannungen auf den beiden Leitungen 118 und 510 abhängt. Durch den mit den Außenanschlüssen der zweiten Spule gekoppelten Abgreifwiderstand 504 wird dieses Signal in eine Spannung umgewandelt, die proportional zu der Differenz der Common-Mode-Spannungen ist.

Mit anderen Worten gesagt, werden bei dem Kommunikationssystem gemäß Fig. 5b die Informationen in einem Phantomkreis, d.h. als Differenz der Common-Mode-Spannungen übertragen. Man kann diese Übertragungstechnik daher auch als differenzielle Common-Mode-Übertragungstechnik oder Common-Mode-Differenz-Verschaltung bezeichnen. Als Rückleiter für die Übertragung ist hierbei keine Masseleitung erforderlich. Da die Übertragung hier ohne aktive Beschaltung der Masseleitung erfolgt, ergibt sich ein robustes Verhalten gegenüber Störeinflüssen.

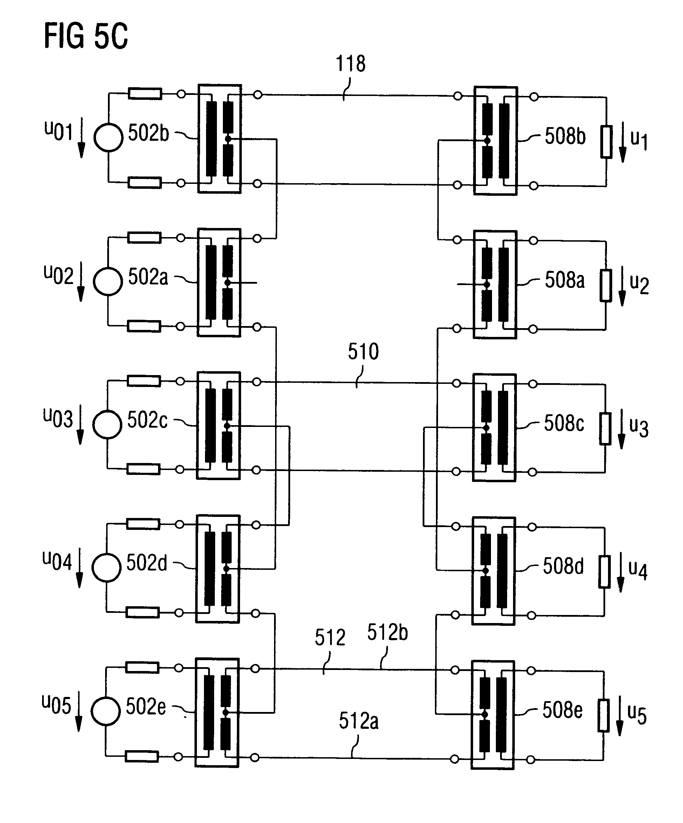

Eine Erweiterung des in Fig. 5b gezeigten Kommunikationssystems auf 3 Leitungen mit jeweils einem Paar von Leitern ist in Fig. 5c gezeigt.

Zusätzlich zu den Leitungen 118 und 510 weist das Ausführungsbeispiel gemäß Fig. 5c eine weitere Leitung 512 mit zwei Leitern 512a und 512b auf. Für jede der Leitungen ist ein Übertragungskanal in Differenzschaltung vorgesehen. Ferner weist das Kommunikationssystem gemäß Fig. 5c zwei Übertragungskanäle in Common-Mode-Verschaltung auf. Die Common-Mode-Verschaltung erfolgt hierbei ebenfalls ohne aktive Beschaltung einer Masseleitung.

In dem Ausführungsbeispiel gemäß Fig. 5c sind fünf Übertrager 502a - e vorgesehen, die mit den drei Leitungen verschaltet sind und eine Kopplungschaltung für die Einspeisung der fünf Signale darstellen. Die Beschaltung erfolgt dabei so, dass drei der Übertrager, d.h. die Übertrager 502b, 502c und 502e jeweils an Außenanschlüssen der ersten Spule ein Sendesignal empfangen, welches als Differenzsignal auf den Leitungen 118, 510 und 512 übertragen wird, wie es oben erklärt wurde. Die ersten Spulen der Übertrager 502a und 502d erhalten ferner Sendesignale, die auf den Common-Mode-Kanälen übertragen werden. Die zweite Spule des Übertragers 502d ist analog zu dem Übertrager 502a in Fig. 5b in einer Common-Mode-Schaltung erster Ordnung verschaltet, d.h. die Außenanschlüsse der zweiten Spule sind mit den Mittelanschlüssen der zweiten Spulen der Übertrager 502c und 502e verkoppelt, um die von der ersten Spule des Übertragers empfangenen Sendesignale als Differenz-Common-Mode-Signale über die Leitungen 510 und 512 zu übertragen. Der Mittelanschluss der zweiten Spule des Übertragers 502d ist mit einem ersten Außenanschluss des Übertragers 502a verschaltet, wobei ein zweiter Außenanschluss der zweiten Spule mit einem Mittelanschluss des Übertragers 502b verschaltet ist. Mit anderen Worten, ist der Übertrager 502a, der Daten zur Common-Mode-Übertragung empfängt, mit einem für die Differenzsignalübertragung vorgesehenen und einem weiteren für die Common-Mode-Übertragung vorgesehenen Übertrager verkoppelt.

Um die übertragenen Sendesignale auf Empfängerseite wiederzugewinnen, ist empfangsseitig eine der Sendeseite entsprechende Beschaltung vorgesehen. D.h., das System weist fünf Übertrager 508a-e auf, wobei die Außenanschlüsse der ersten Spule der Übertrager 508b, 508c und 508e mit den Leitungen gekoppelt sind, während die Außenanschlüsse des Transformators 508a mit Mittelanschlüsse der Übertrager 508b und 508d gekoppelt sind. Die Außenanschlüsse der ersten Spule des Übertragers 508d sind mit den Mittelanschlüssen der ersten Spule des Übertrager 508c und 508e gekoppelt. Die Umwandlung der Signale der zweiten Spulen in Spannungssignale erfolgt entsprechend zu den Fig. 5a und 5b durch jeweils einen Abgreifwiderstand 504, der mit den beiden Außenanschlüssen der zweiten Spulen gekoppelt ist.

Im Unterschied zu dem Ausführungsbeispiel gemäß Fig. 5b weist das Ausführungsbeispiel gemäß Fig. 5c eine Common-Mode-Verschaltung zweiter Ordnung auf, da zwei Common-Mode-Übertragungskanäle auf drei Leitungen aufzuteilen sind. Unter Common-Mode-Verschaltung zweiter Ordnung soll hierbei eine Verschaltung verstanden werden, bei der zumindest eine Common-Mode-Spannung eines Leiterpaars nicht nur von einem Datensendesignal sondern auch von einem weiteren zweiten Datensendesignal abhängig ist. Mit anderen Worten gesagt, werden die für die Übertragung auf den beiden Common-Mode-Kanälen zu übertragenden Signale so aufgeteilt, dass eines der Signale in einfacher Common-Mode-Differenzverschaltung, wie es oben unter Bezugnahme auf Fig. 5b erklärt wurde, übertragen wird, so dass sich das Empfangssignal als Differenz der beiden Common-Mode-Spannungen zweier Leitungen ergibt. Um eine Übertragung auch des zweiten Signals ohne aktive Beschaltung der Masse zu erreichen, wird der verbleibende freie Parameter eines Bezugspotentials des Mittelanschlusses der zweiten Spule desjenigen Übertragers, der Signale zu Übertragung in einfacher Common-Mode-Differenzverschaltung erhält, d.h. in dem System gemäß Fig. 5c der Übertrager 502c, abhängig von dem anderen in Common-Mode-Verschaltung zu übertragenden Signal, d.h. abhängig von dem an dem Übertrager 502a empfangenen Signal, durch Verschalten mit dem Außenanschluss der zweiten Spule des Übertragers 502a moduliert.

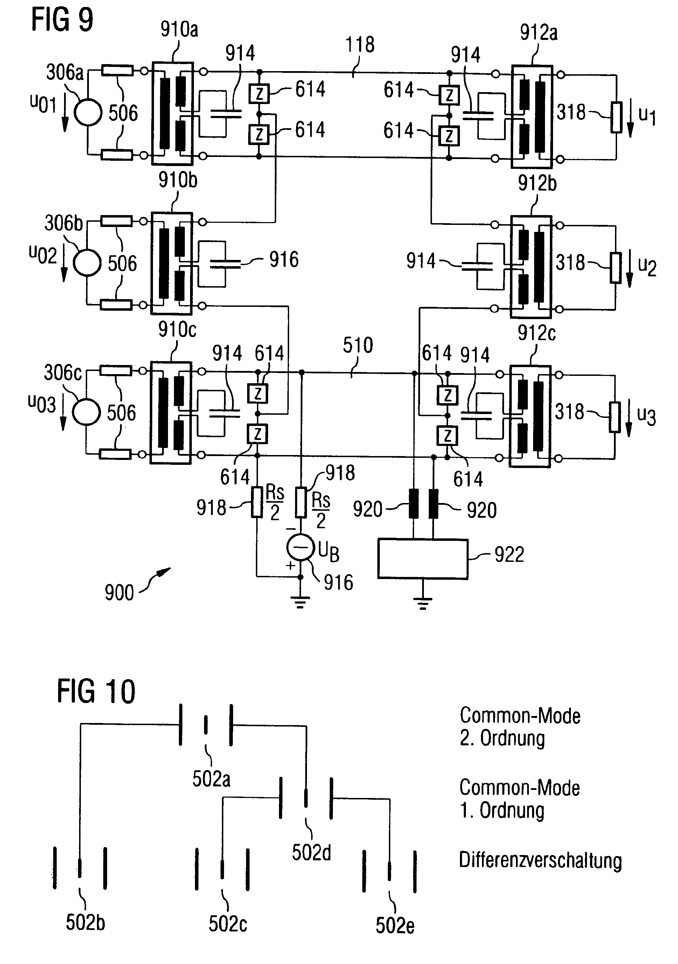

Fig. 10 zeigt ein Hierarchiediagramm von Übertragern für die Verschaltung gemäß dem Ausführungsbeispiel nach Fig. 5c. In dem Hierarchiediagramm sind der Einfachheit halber lediglich die Anschlüsse der jeweilig leitungsseitig verkoppelten Spulen dargestellt. Auf einer Differenzverschaltungsebene sind die Übertrager 502b, 502c und 502e angeordnet, deren Außenanschlüsse mit den Leitern der Leitungen verschaltet sind, um Daten als Differenzsignale zu übertragen. Die Übertrager 502c und 502e sind miteinander gepaart, wobei dem Paar auf einer Ebene darüber, d.h. auf einer Common-Mode-Ebene 1. Ordnung, ein Übertrager, d.h. der Übertrager 502d zugeordnet ist. Die jeweiligen Mittelanschlüsse der Übertrager 502c und 502e sind mit den Außenanschlüsse des Übertragers 502d, der auf einer Common-Mode-Ebene 1. Ordnung angeordnet ist, verschaltet. Wie in Fig. 10 ersichtlich, bilden die Übertrager 502c, 502e und 502d somit eine Hierarchiepyramide. Zur Beschaltung der noch verbleibenden Mittelanschlüsse der Übertrager 502d und 502b ist auf einer Common-Mode-Ebene 2. Ordnung der Übertrager 502a angeordnet, dessen Außenanschlüsse mit den jeweiligen Mittelanschlüssen der Übertrager 502d und 502b verschaltet sind, die eine bzw. zwei Ebenen unterhalb der Common-Mode-Ebene 2. Ordnung angeordnet sind.

Allgemein kann für ein System mit n Leitungen bis zu 2n-1 Kanäle gebildet werden, die sich aus n Differenzverschaltungskanälen und n-1 Common-Mode-Kanälen zusammensetzen.

Ein Ausführungsbeispiel zur Generierung einer Verschaltung der Übertrager soll im Folgenden anhand von Hierarchiediagrammen 11a-c für ein System von n=7 Leitungen näher erläutert werden.

Zunächst wird in einem ersten Schritt für jede der n Leitungen jeweils ein Übertrager zur Übertragung eines Differenzsignals bereitgestellt. Die n Übertrager zur Übertragung von Differenzsignalen empfangen jeweils mit der ersten Spule ein Sendesignal, wobei die Außenanschlüsse der zweiten Spule mit dem Paar von Leitern der Leitung, verschaltet werden, um das Sendesignal als Differenzsignal einzuspeisen. Danach werden jeweils zwei der n Übertrager gepaart. Für jedes gebildete Paar von Übertragern wird eine Common-Mode-Verschaltung erster Ordnung durchgeführt, wobei für jedes Paar von Leitungen jeweils ein Übertrager auf einer Ebene darüber, d.h. auf einer Common-Mode-Ebene 1. Ordnung bereitgestellt wird, wobei die Mittelanschlüsse der zwei Übertrager der unteren Ebene mit den Außenanschlüssen des zugeordneten Übertragers einer Ebene darüber verschaltet werden. Gebildete Paare auf dieser Ebene werden wiederum gepaart und mit einem zugeordneten Übertrager einer höheren Ebene verschaltet, d.h. die Mittelanschlüsse der zwei Übertrager der unteren Ebene werden mit den Außenanschlüssen des zugeordneten Übertragers einer Ebene darüber verschaltet, usw.

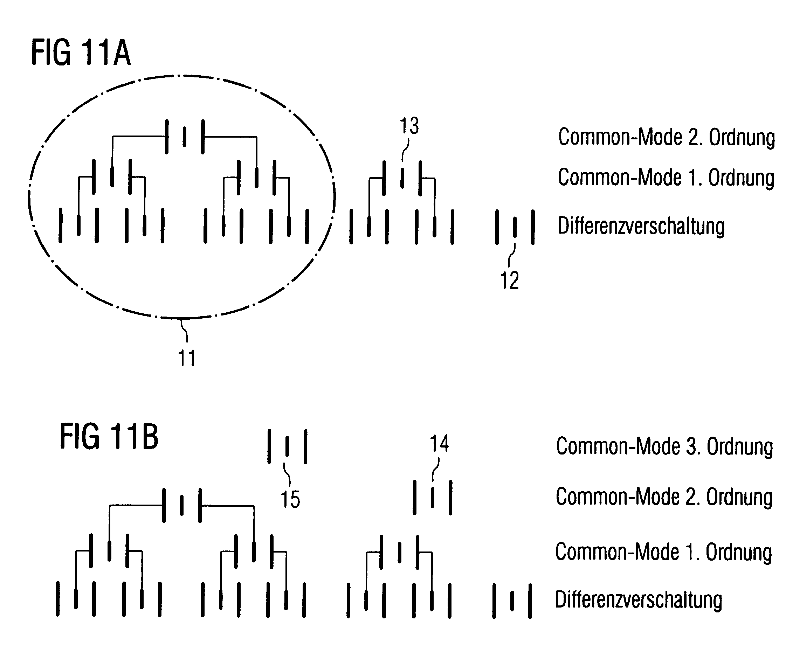

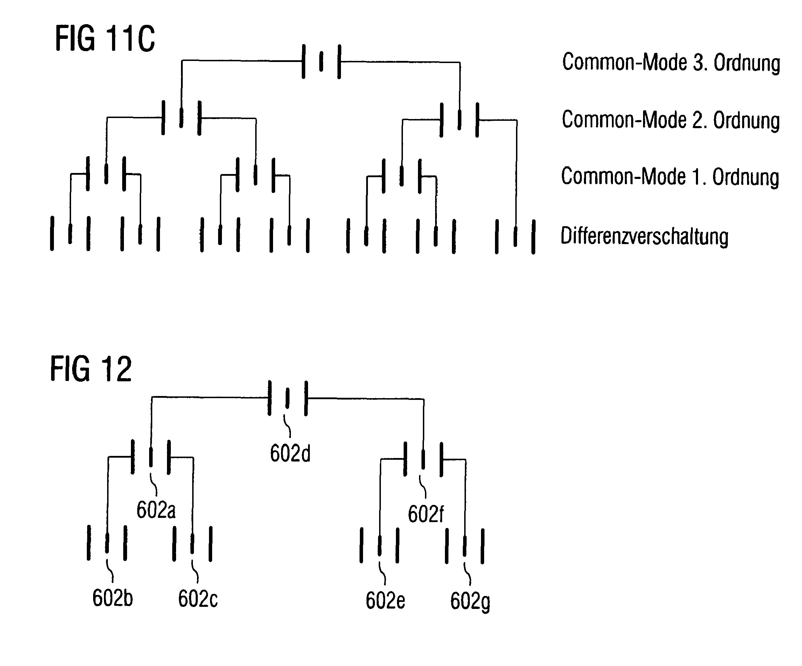

Fig. 11a zeigt ein System von 7 Leitungen nach dem Durchführen der obigen Schritte. Wie zu erkennen ist, entsteht durch das paarweise hierarchische Verschalten eine Pyramide 11. Da bei ungeradzahliger Anzahl auf einer Ebene nicht alle Übertrager gepaart werden können, können sich auf Ebenen ungepaarte Übertrager bilden. In dem Ausführungsbeispiel gemäß Fig. 11a ist sowohl auf der Differenzverschaltungsebene ein Übertrager 12 als auch auf der Common-Mode-Ebene 1. Ordnung ein Übertrager 13 ungepaart. Um diese ungepaarten Übertrager zu verschalten, werden die noch verbleibenden Übertrager der 2n-1 Übertrager so auf die Common-Mode-Ebenen verteilt, dass sich auf jeder Ebene nur 1 ungepaarter Übertrager befindet. Dies ist in Fig. 11b dargestellt. Da sich die Übertrager 12 und 13 auf der Differenzverschaltungsebene und der Common-Mode-Ebene befinden, werden in dem Ausführungsbeispiel ein Übertrager 15 auf der Common-Mode-Ebene 2. Ordnung und ein Übertrager 16 auf der Common-Mode-Ebene 3. Ordnung angeordnet.

Daraufhin werden die noch nicht vollständig verschalteten Übertrager hierarchisch von oben nach unten verschaltet. D.h. die Außenanschlüsse der Übertrager höherer Ordnung werden mit den Mittelanschlüssen von zwei Übertrager von darunter liegender Ordnung verschaltet usw.

Dadurch wird ein hierarchischer Baum generiert, bei dem Außenanschlüsse von Übertragern nur hierarchisch nach unten mit Mittelanschlüssen verschaltet sind. Hierdurch wird eine Schleifenverschaltung der Übertrager vermieden.

Es sei an dieser Stelle angemerkt, dass Common-Mode-Verschal tungen auch nach anderen Abläufen oder Regeln erzeugt werden können. Zu beachten ist dabei, dass eine Schleifenbildung der Übertrager vermieden wird und ein Mittelanschluss eines Übertragers mit einem Außenanschluss eines anderen Übertragers zu verschalten ist.

Es sei ferner bemerkt, dass die obigen Erläuterungen nicht nur auf Übertrager mit Mittelanschluss sondern auch für andere Kopplungsschaltungen anwendbar ist, beispielsweise eine Kopplungsschaltung unter Verwendung eines Spannungsteilers mit komplexen oder rein ohmschem Widerständen, wie es obig unter Bezugnahme auf Fig. 3 und in weiteren Ausführungsbeispielen nachfolgend beschrieben ist, oder einer Kopplungsschaltung, bei der die Mittelanschlüsse galvanisch getrennt sind, wie es weiter unten unter Bezugnahme auf Fig. 9 für ein exemplarisches Ausführungsbeispiel erklärt wird.

Es sei ferner angemerkt, dass sich das die oben angeführten exemplarischen Verschaltungsregeln sowohl auf die Kopplungsschaltungen auf Senderseite als auch auf die Auskopplungsschaltungen auf Empfängerseite beziehen können, da diese symmetrisch zueinander sind.

Gemäß Ausführungsbeispielen der vorliegenden Erfindung können die oben beschriebenen Systeme auch im Duplexverfahren betrieben werden, d.h. auf beiden Seiten der Leitungen können Signale eingespeist und abgegriffen werden. Hierbei kann eine Kopplungsschaltung, wie beispielsweise eine durch die Transformatoren 502a- 502e gebildete Kopplungsschaltung, sowohl zum Senden über die Differenzverschaltungskanäle und die Common-Mode-Kanäle, als auch zum Empfangen über die Differenzverschaltungskanäle und die Common-Mode-Kanäle auf beiden Seiten verwendet werden.

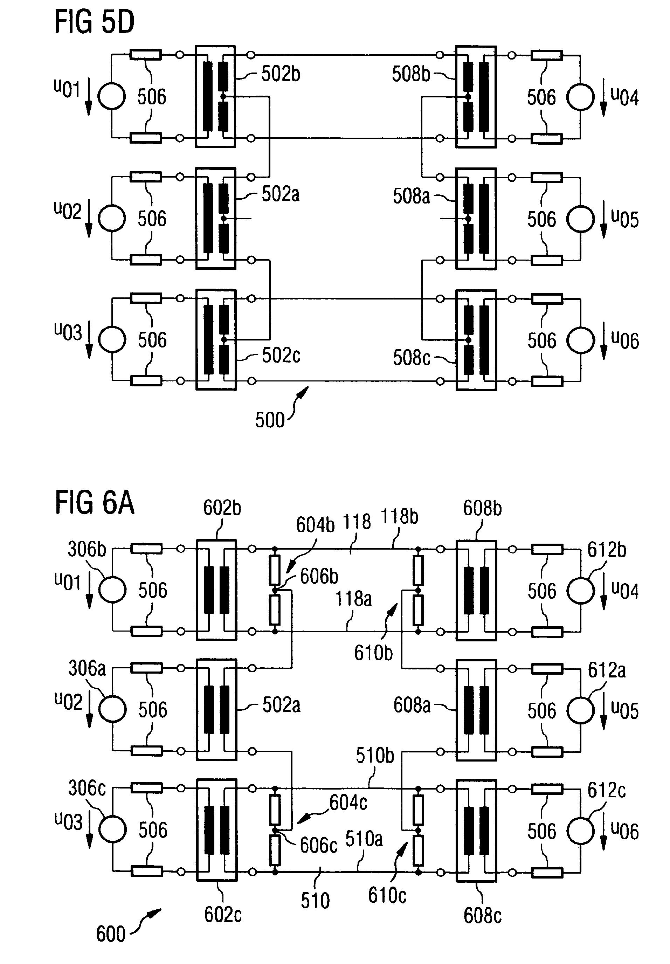

Fig. 5d zeigt ein exemplarisches Ausführungsbeispiel eines Systems im Duplex-Betrieb, welches dem in Fig. 5b gezeigten System entspricht. Im Unterschied zu dem in Fig. 5b gezeigten Kommunikationssystem zeigt Fig. 5d anstelle jeweils eines einzelnen Abgreifwiderstands 504 ein Paar von Koppelwiderständen 506, die jeweils mit Außenanschlüssen der zweiten Spulen der Übertrager 508a - 508c verschaltet sind. Dadurch können auf beiden Seiten der Leitungen mit Hilfe von Spannungsquellen abhängig von den jeweiligen Spannungen U₀₁ bis U₀₃ bzw. U₀₄ bis U₀₆, Signale auf die Leitungen gegeben und über dieselben übertragen werden. Die jeweiligen Empfangssignale werden an den entsprechenden Eingängen der Übertrager abgegriffen und über Hybridschaltungen weiterverarbeitet, wobei dieselben in Fig. 5d nicht dargestellt sind.

Bei den in den Fig. 5a bis 5d gezeigten Ausführungsbeispielen werden die Signale der Common-Mode-Schaltung bzw. Phantomkreisschaltung über einen Mittelanschluss bzw. Mittenanzapfung des Übertragers auf der Leitungsseite eingespeist. In Verbindung mit der Phantomleitung ergibt sich dadurch ein Tiefpassverhalten für den Phantomkreis. Ebenso sei bemerkt, dass der Übertrager bzw. die Hauptinduktivität des Übertragers in Verbindung mit der Leitung und den entsprechenden Abschlusswiderständen einen passiven Hochpass darstellt, dessen Grenzfrequenz von den Werten der Hauptinduktivität sowie den Größen der beschalteten Widerstände abhängt.

Bei Ausführungsbeispielen der vorliegenden Erfindung kann ferner eine Kombination aus einem Übertrager und einem Spannungsteiler in einer Koppelschaltung verwendet werden, um Signale auf den Leitungen zu senden bzw. Signale von den Leitungen zu empfangen. Fig. 6a zeigt ein exemplarisches Kommunikationssystem 600, bei dem 3 Übertrager 602a - 602c eine Koppelschaltung bilden, wobei jeder der Übertrager eine erste Spule und eine zweite Spule aufweist. Die ersten Spulen der Übertrager 602a - 602c sind entsprechend zu dem Ausführungsbeispiel gemäß Fig. 5b - 5d über die Koppelwiderstände 506 mit Spannungsquellen 306a - 306c verschaltet. Die Außenanschlüsse der Transformatoren 602b und 602c sind mit den jeweiligen Leitern 118a und 118b der Leitern 118 bzw. den elektrischen Leitern 510a und 510b der Leitung 510 verschaltet. Parallel zu zweiten Spulen der Übertrager 602b und 602c ist jeweils ein Spannungsteiler 604b bzw. 604c mit jeweils 2 komplexen Widerständen bzw. 2 komplexen Widerstandsnetzwerken geschaltet. Ein Knoten 606b und 606c zwischen den jeweiligen komplexen Widerständen bzw. komplexen Widerstandsnetzwerken der Spannungsteiler 604b und 604c ist ferner mit den Außenanschlüssen der zweiten Spule des Übertragers 602a verschaltet. Die Übertrager 602b und 602c bilden zusammen mit den jeweiligen Spannungsteilern 604b und 604c eine Koppelschaltung zum Einspeisen der von den Spannungsquellen gelieferten Sendesignale, wobei die von der Spannungsquelle 306a bereitgestellten Sendesignale für die Common-Mode-Kanalübertragung die Common-Mode-Spannungen der Leitungen 118 und 510 über die Veränderung der an dem Knotenpunkt 606b anliegenden Spannung moduliert.

An dem anderen Leiterende ist entsprechend eine Anordnung von 3 Übertragern 608a - 608c vorgesehen, wobei parallel zu den mit den Leitern verkoppelten ersten Spulen der Übertrager 608b und 608c jeweilige Spannungsteiler 610b und 610c geschaltet sind. Die zweiten Spulen der Übertrager 608a - 608c sind mit den Außenanschlüssen über jeweilige Paare von Widerständen 506 mit Spannungsquellen 612a- 612c verschaltet. Wie bei dem Ausführungsbeispiel gemäß Fig. 5d ist auch bei diesem Ausführungsbeispiel ein Duplex-Betrieb vorgesehen, wobei entsprechende Hybridschaltungen zum Aufteilen der Signale in Empfangs- und Sendezweige nicht gezeigt sind.

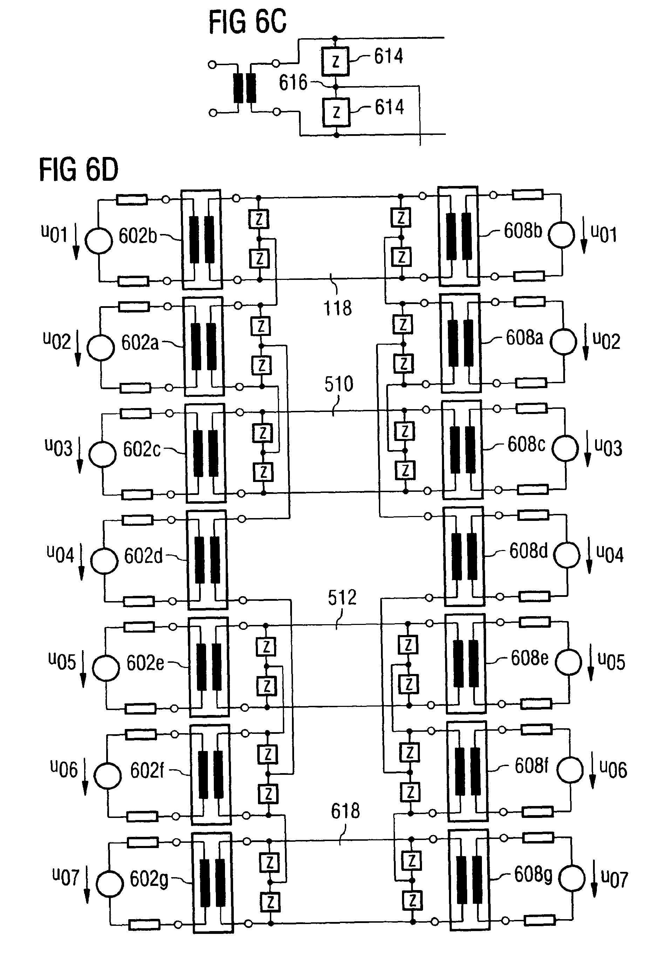

Bei Ausführungsbeispielen der vorliegenden Erfindung kann die Common-Mode-Verschaltung allgemein über ein komplexes Widerstandsnetzwerk durchgeführt werden, bei dem ohmsche Widerstände, Kapazitäten und Induktivitäten miteinander verschaltet sind, um einen komplexen Widerstand zu bilden. Bei einem Ausführungsbeispiel ist das Netzwerk aus identisch komplexen Widerstandszweipolen von 614 gebildet, wie es in Fig. 6c dargestellt ist. Die komplexen Widerstandszweipole 614 bilden einen Spannungsteiler, der zwischen die beiden Leitern der jeweiligen Leitung und daher parallel zu der mit der Leitung verbundenden Spule geschaltet ist. Die Einspeisung zur Übertragung auf den Common-Mode-Kanälen erfolgt an einem jeweiligen Knotenpunkt 616 zwischen den beiden Widerstandszweipolen 614.

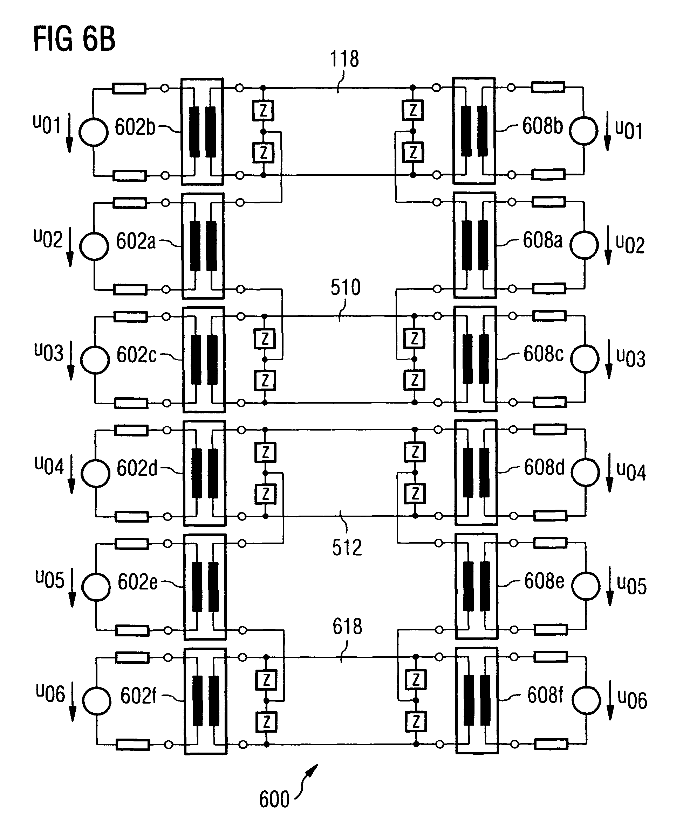

Fig. 6b zeigt ein weiteres Ausführungsbeispiel der vorliegenden Erfindung, bei dem 4 Leitungen 118, 510, 512 und 618 mit 6 Übertragern 602a - 602f gekoppelt sind, um entsprechende Übertragungen von Signalen auf 6 Kanälen, d. h. 4 Differenzschaltungskanälen und 2 Common-Mode-Kanälen bzw. Phantomkreiskanälen durchzuführen. Das in Fig. 6b gezeigte Kommunikationssystem 600 kann beispielsweise ein LAN-Übertragungssystem darstellen, bei dem 4 Leitungen zu 6 Kommunikationskanälen verschaltet sind, wobei 4 der Kommunikationskanäle Differenzverschaltungskanäle sind, und 2 Kommunikationskanäle Common-Mode-Kanäle sind.

Die Verschaltung der an einem Leitungsende angeordneten Übertrager 602b - 602f und der an dem gegenüberliegenden Leitungsende angeordneten Übertragern 608a - 608f erfolgt, wie bereits oben beschrieben, durch Paarung der Leitungen 118 und 510 und der Leitungen 512 und 618, wobei die Einspeisung der Sendesignale entsprechend zu der in Fig. 6c dargestellten Kopplungsschaltung unter Verwendung zweier komplexer Widerstandszweipole erfolgt.

Ein weiteres Ausführungsbeispiel, bei dem 4 Leitungen zu 7 Kanälen, d. h. 4 Differenzschaltungskanälen und 3 Common-Mode-Kanälen, verschaltet sind, ist in Fig. 6d gezeigt. Die Verschaltung erfolgt hierbei vollständig hierarisch, wie oben beschrieben, wobei das zugehörige Hierarchiediagram in Fig. 12 dargestellt ist. Die mit den jeweiligen Leitungen 118, 510, 512 und 618 gekoppelten Übertrager 602b, 602c, 602e und 602g sind jeweils für einen Common-Mode-Verschaltung erster Ordnung gepaart, wobei ein erstes Paar aus den Übertragern 602b und 602c mit dem Übertrager 602a verschaltet ist, während ein zweites Paar aus den Übertragern 602e und 602g mit dem Übertrager 602f verschaltet ist. Die auf der Common-Mode-Ebene erster Ordnung angeordneten Übertrager 602a und 602f sind selbst gepaart und mit dem auf einer Common-Mode-Ebene zweiter Ordnung angeordneten Übertrager 602d verschaltet.

Die in den Fig. 6b und 6d gezeigten Ausführungsbeispiele können beispielsweise für eine Datenübertragung in LAN-Netzen über 4-paarige Twisted-Pair-Leitungen verwendet werden. Beispielsweise kann zur Übertragung von 1 GBit/s der Datenstrom in entsprechende Teildatenströme aufgeteilt werden, so dass gegenüber bekannten LAN-Übertragungssystemen, bei denen lediglich 4 Kanäle gebildet sind, eine Reduzierung der Datenrate pro Kanal erzielt werden kann und damit der Übertragungsaufwand und verringert werden kann und die Qualität der Übertragung verbessert werden kann. In entsprechender Weise kann das Kommunikationssystem auch auf höherratige Systeme, beispielsweise 10 GBit/s - LAN-Netzwerken verwendet werden. Wie bereits oben erläutert, kann hierbei ein Duplex-Betrieb verwendet werden. Ferner können auch andere Kopplungsschaltungen zur Kopplung gemäß den Figuren 6b und 6d verwendet werden.

Die Datenübertragung auf den Common-Mode-Kanälen lässt sich gleichermaßen auf Nah-Kommunikationssysteme als auch auf Fern-Kommunikationssystemen anwenden. Beispielsweise lässt sich eine Common-Mode-Verschaltung in DSL-Übertragungssystemen, die allgemein als xDSL-Systeme bekannt sind, wobei x als Platzhalter für die unterschiedlichen Systeme steht, realisieren.

Weist beispielsweise ein Telefonteilnehmer bereits einen Anschluss mit Adernpaaren, d. h. einen Vierdrahtanschluss, auf, so können die zwei Leitungen zu 3 Kanälen verschaltet werden, wodurch die maximale Datenrate gesteigert werden kann. Hierbei kann beispielsweise eine Aufteilung derart erfolgen, dass 2 von 3 Kanälen in Downstream-Richtung verwendet werden und einer der 3 Kanäle in Upstream-Richtung verwendet werden.

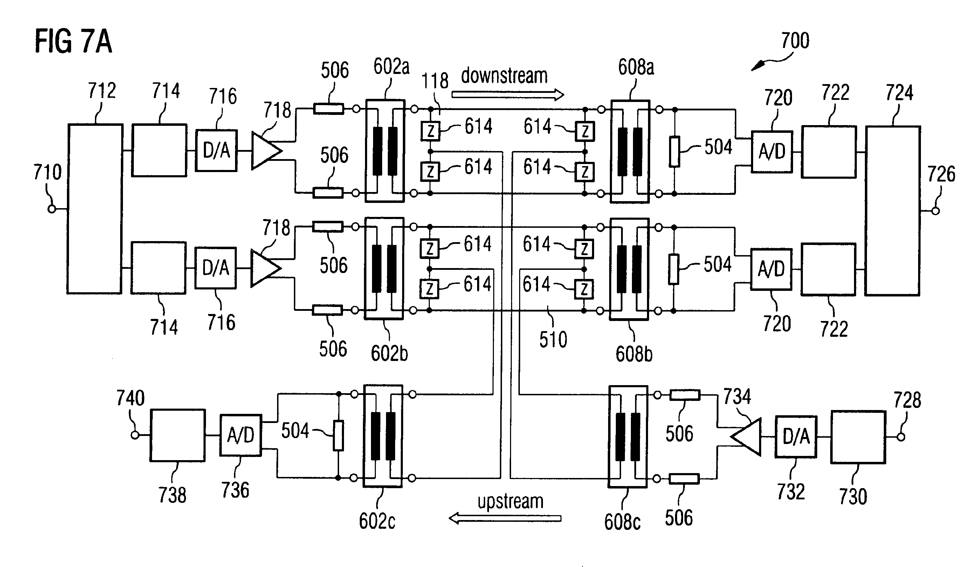

Fig. 7a zeigt ein Ausführungsbeispiel eines Kommunikationssystems 700, beispielsweise eines xDSL-Kommunikationssystems. Das Kommunikationssystem 700 weist 2 Leitungen 118 und 510 auf, die zu 3 Kanälen, d. h. 2 Differenzschaltungskanälen und einem Common-Mode-Kanal bzw. Phantomkreiskanal verschaltet sind. Bei dem in Fig. 7a gezeigten Ausführungsbeispiel werden die Kanäle derart aufgeteilt, dass die beiden Differenzschaltungskanäle für eine Datenkommunikation in Downstream-Richtung Daten übertragen, während der Common-Mode-Kanal in Upstream-Richtung Daten überträgt. An einem ersten Leitungsende weist das Kommunikationssystem 700 einen ersten Eingang 710 zum Empfangen von Sendedaten auf. Der Eingang 710 ist mit einem Invers-Multiplexer 712 gekoppelt. Der Invers-Multiplexer 712 weist entsprechend zu den beiden Kanälen in Downstream-Richtung 2 Ausgänge auf, die mit beiden Leitungen 118 und 510 jeweils gekoppelt sind. Genauer gesagt, ist jeder der Ausgänge des Invers-Multiplexers 712 mit einem Modulations/Filter-Block 714 gekoppelt, der ausgangsseitig mit einem Digital-Analog-Wandler 716 verschaltet ist. Ein Ausgang jeder der Digital-Analog-Wandler 716 ist mit einem Leitungstreiber 718 verschaltet. Der Leitungstreiber 718 ist über die bereits oben erläuterten Koppelwiderstände 506 mit einer Kopplungsschaltung verschaltet, die entsprechend der Schaltungen gemäß Fig. 6c aus einer Verschaltung eines Transformators 602a bzw. 602b mit einer Reihenschaltung von komplexen Widerständen 614 gebildet ist. In entsprechender Weise ist an dem zweiten Leitungsende eine Kopplungsschaltung mit den Leitungen 118 bzw. 510 verschaltet, die aus einer Verschaltung der Übertrager 608a bzw. 608b mit einem Spannungsteiler aus komplexen Widerständen 614 gebildet ist, wie es oben erläutert wurde. Die zweite Spule der Übertrager 608a bzw. 608b ist mit dem Widerstand 504 verschaltet, der mit den beiden Enden mit Eingängen eines Analog-Digital-Wandlers 720 verschaltet ist. Die jeweiligen Analog-Digital-Wandler 720 sind jeweils mit einem Demodulations/Filter-Block 722 verschaltet, wobei jeder der Demodulations/Filter-Blöcke mit Eingängen eines Multiplexers 724 verschaltet ist. Ein Ausgang des Multiplexers 724 ist mit einem Eingang 726 zum Empfangen der empfangenden Daten verschaltet.

Zur Übertragung in Upstream-Richtung weist das Kommunikationssystem 700 auf der zweiten Leitungsseite einen Eingang 728 zum Empfangen von Sendedaten auf, die in Upstream-Richtung übertragen werden. Der Eingang 728 ist mit einem Modulations/Filterblock 730 verschaltet, der ferner mit einem Digital-Analog-Wandler 732 verschaltet ist, um ein analoges Sende-Signal zu erzeugen. Der Digital-Analog-Wandler 732 ist mit einem Leitungstreiber 734 verschaltet, der über Kopplungswiderstände 506 mit einem Übertrager 608c verschaltet ist. Außenanschlüsse der zweiten Spule des Übertragers 608c sind jeweils mit Knoten zwischen den komplexen Widerständen 614 der Spannungsteile der ersten Leitung 118 und der zweiten Leitung 510 verschaltet. In entsprechender Weise sind an dem ersten Leitungsende, d. h. der Empfangsseite in Upstream-Richtung, Knotenpunkte zwischen den komplexen Widerständen 614 der Spannungsteiler der ersten Leitung 118 und der zweiten Leitung 510 mit einer ersten Spule des Übertragers 602c verschaltet. Außenanschlüsse der zweiten Spule des Übertragers 602c sind mit dem Abgreifwiderstand 504 verschaltet, der mit Eingängen eines Analog-Digital-Wandlers 736 verschaltet ist. Der Analog-Digital-Wandler 736 ist mit einem Demodulations/Filter-Block 738 verschaltet, der wiederum mit einem Ausgang 740 gekoppelt ist, um die empfangenen digitalen Daten auszugeben. Durch die Verschaltung der Übertrager 602c und 608c mit den Spannungsteilern an den jeweiligen Leitungsenden der Leitungen 118 und 510 wird eine Common-Mode-Verschaltung bzw. Phantomkreisschaltung zum Übertragen der Daten in Upstream-Richtung gebildet.

Im Betrieb werden die Sendedaten zur Übertragung in Downstream-Richtung an dem Eingang 710 empfangen und dem Invers-Multiplexer 712 zugeführt. Der Invers-Multiplexer 712 teilt die empfangenen Daten in 2 Datenströme auf, wobei jeder der Datenströme mittels des Modulations/Filterblocks 714 auf einen Träger moduliert und gefiltert wird. Durch die jeweiligen Digital-Analog-Wandler 716 werden die digitalen Signale in analoge Signale umgewandelt. Die jeweiligen Leitungstreiber 718 empfangen die Sendesignale und speisen diese mittels der Widerstände 506 und der jeweiligen Übertrager 602a bzw. 602b in die erste Leitung 118 bzw. die zweite Leitung 510 ein. Die übertragenen analogen Sendesignale werden an dem zweiten Leitungsende empfangen und den Übertragern 608a bzw. 608b den jeweiligen Abgreifwiderständen 504 zugeführt. Die Abgreifwiderstände 504 wandeln das Stromsignal in ein Spannungssignal um, welches den Analog-Digital-Wandlern 720 zugeführt wird. Nach der Analog-Digital-Wandlung werden die Daten in dem Demodulations/Filter-Block 722 demoduliert und gefiltert und mittels des Multiplexers 724 in einen gemeinsamen Datenstrom zusammengeführt, der an dem Ausgang 726 ausgegeben wird. In Upstream-Richtung werden digitale Sendedaten an dem Eingang 728 empfangen und nach dem Modulieren und Filtern durch den Modulations/Filter-Block 730 und Digital-Analog-Wandlung durch den Digital-Analog-Wandler 732 dem Leitungstreiber 734 zugeführt. Der Leitungstreiber 734 speist mittels des Übertragers 608c die analogen Sendesignale mittels der durch die komplexen Widerstände 614 gebildeten Spannungsteiler an dem zweiten Ende der Leitungen 118 und 510 ein. Das durch den Phantomkreis übertragene Signal wird an der ersten Seite der Leitungen 118 und 510 mittels der durch die komplexen Widerstände 614 gebildeten Spannungsteiler abgegriffen und dem Übertrager 602c zugeführt. Das empfangene analoge Signal wird an dem Abgreifwiderstand 504 in eine Spannung umgesetzt, welche durch den Analog-Digital-Wandler 736 in ein digitales Empfangssignal umgewandelt wird. Das digitale Empfangssignal wird dem Demodulations/Filter-Block 738 zugeführt, der das demodulierte und gefilterte digitale Signal an den Ausgang 740 ausgibt.

Durch die Verwendung der beiden Differenzschaltungkanäle für die Downstream-Datenübertragung und den Common-Mode-Übertragungskanal für die Upstream-Datenübertragung weist das Kommunikationssystem unsymmetrische Datenübertragungsraten auf. Da typischer weise in der Downstream-Richtung eine größere Datenmenge als in der Upstream-Richtung übertragen wird, ist diese Aufteilung geeignet, den Anforderungen bei der Datenkommunikation zwischen einem Teilnehmer und einer Vermittlungsstelle (Central Office) zu entsprechen.

Bei anderen Ausführungsbeispielen können jedoch andere Aufteilungen durchgeführt werden, beispielsweise kann ein Differenzschaltungskanal und der Common-Mode-Kanal zur Downstream-Datenübertragung verwendet werden während der andere Differenzschaltungskanal in Upstream-Richtung überträgt. Ferner kann das Kommunikationssystem auch als Duplexsystem ausgebildet sein, bei dem eine oder mehrere der Kanäle, d. h. einer oder mehrere der Kanäle, die sich aus den beiden Differenzschaltungskanälen und dem Common-Mode-Kanal zusammensetzen, zur Übertragung in beide Richtungen verwendet werden.

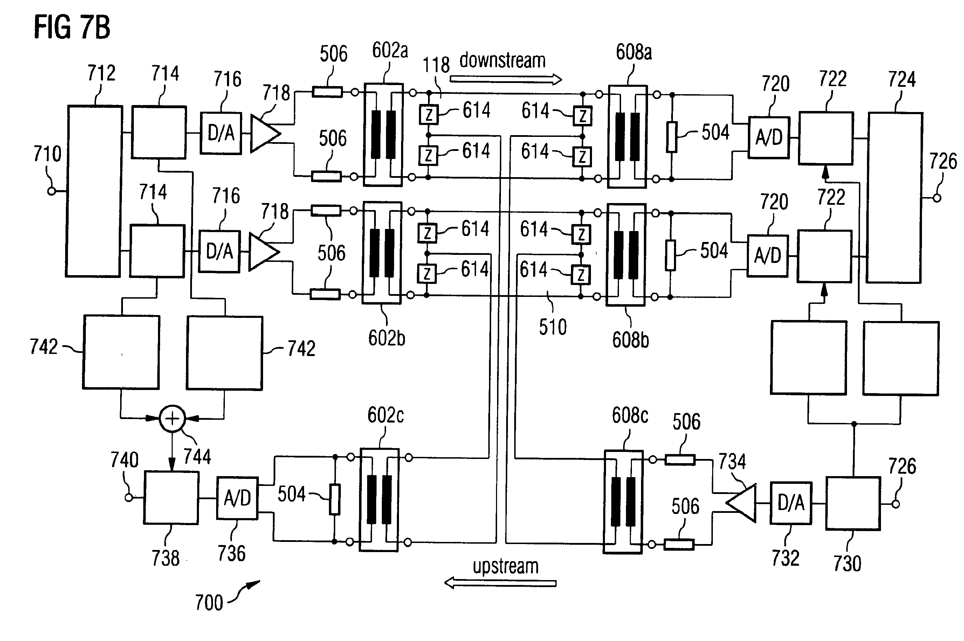

Die oben beschriebenen Kommunikationssysteme sind dabei vollständig unabhängig von einem verwendeten Modulationsverfahren und können beispielsweise als Modulationsverfahren PAM (Pulse Amplitude Modulation), wie beispielsweise bei SDSL, DMT (Discrete Multiton Modulation), wie beispielsweise bei ADSL oder WSDL, und QAM (Quadrature Amplitude Modulation) bzw. CAP (Carrierless Amplitude Phasemodulation) verwenden. Um ein Übersprechen zwischen den Kanälen, d. h. beispielsweise von den beiden Differenzschaltungskanälen in den Common-Mode-Kanal oder von dem Common-Mode-Kanal in die beiden Differenzschaltungssignale, zu reduzieren oder zu kompensieren, ist bei einem Ausführungsbeispiel, das nachfolgend unter Bezugnahme auf Fig. 7b erklärt wird, eine Übersprech-Kommensationsvorrichtung vorgesehen.

Das in Fig. 7b gezeigte Kommunikationssystem 700 ist weitgehend entsprechend dem in Fig. 7a gezeigten Kommunikationssystem aufgebaut, wobei im Unterschied zu dem in Fig. 7a gezeigten Kommunikationssystem das in Fig. 7b gezeigte Kommunikationssystem 700 Übersprechkompensatoren 742 aufweist, die mit den Modulations/Filter-Blöcken bzw. Modulations/Filter- Schaltungen 714 verschaltet sind. Die Verschaltung mit den Modulations/Filter-Blöcken 714 kann dabei derart erfolgen, dass Signale für die Kompensation vor oder nach dem Modulator der Modulations-Filter-Schaltung oder vor oder nach dem Sendefilter in der Modulations-Filter-Schaltung abgegriffen werden und den Kompensatoren 742 zugeführt werden. Die Übersprechkompensatoren 742 sind jeweils mit Eingängen eines Summationsknotens 744 verschaltet, wobei ein Ausgang des Summationsknotens 744 mit dem Demodulations/Filter-Block 738 verschaltet ist. Durch das Abgreifen der geeigneten Sendesignale kann in den Übersprechkompensatoren ein Kompensationssignal erzeugt werden, welches zur Verringerung der Störung des Empfangssignals durch das Sendesignal entsprechende Kompensationen in dem Empfangssignal durchführt. Hierbei können die gleichen Vorrichtungen und Strukturen wie bei herkömmlichen xDSL-Systemen, beispielsweise herkömmliche Echokompensationssysteme, Prekompensationssystem etc., verwendet werden.

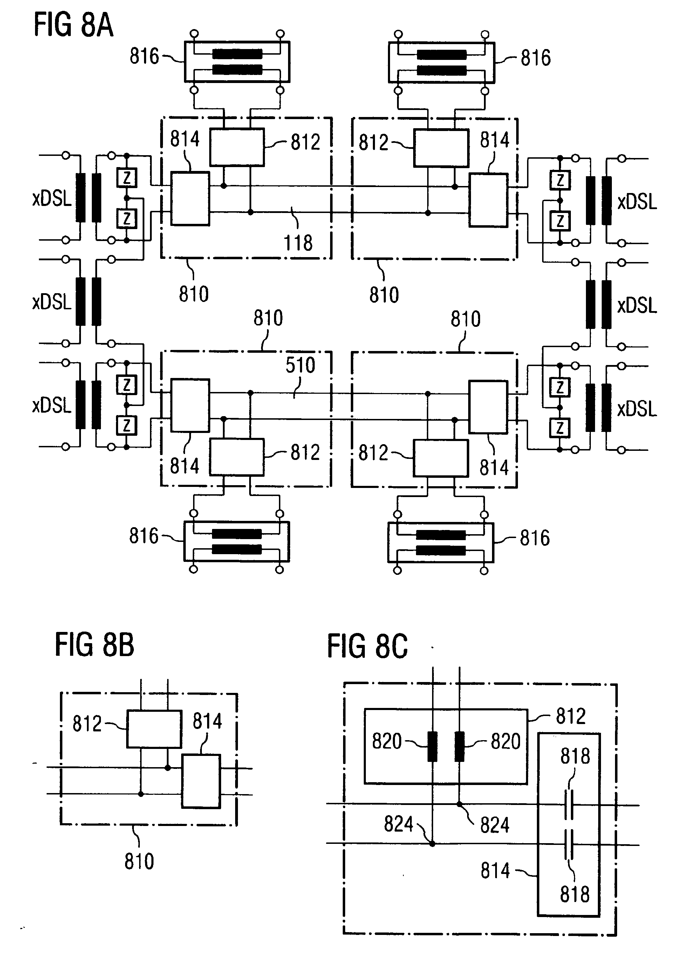

Bei einem Ausführungsbeispiel können die durch die Differenzschaltung und die Common-Mode-Verschaltung gebildeten Kanäle Daten unterschiedlichen Typs auf unterschiedlichen Frequenzen übertragen. Beispielsweise können entsprechend zu bekannten xDSL-Systemen parallel zu den breitbandigen xDSL-Signalen noch niederfrequente Sprachsignale oder ISDN-Signale über die gleichen Kanäle oder die gleiche Leitung übertragen werden. Die Trennung der Signale auf beiden Seiten der Leitung kann mittels bekannter Trenneinrichtungen, wie beispielsweise bekannter Splitter erfolgen. Fig. 8a zeigt ein Ausführungsbeispiel eines derartigen Systems, bei dem Splitter 810 an jedem Ende der Leitungen 118 und 510 mit den Leitern der Leitungen verschaltet sind. Die Splitter 810 weisen jeweils einen Tiefpass 812 und einen Hochpass 814 auf, um die Signale erster Art, beispielsweise Sprachsignale von den Signalen zweiter Art, beispielsweise, xDSL-Signalen, zu trennen. Die Tiefpässe 812 der Splitter 810 sind jeweils mit Transformatoren 816 verschaltet, um die entsprechenden Sendesignale der ersten Art, beispielsweise die Sprachsignale, zu senden bzw. zu empfangen. Die Hochpassfilter 814 sind einerseits mit den jeweiligen Leitungen 118 bzw. 510 verschaltet, und andererseits mit den jeweiligen Koppelschaltungen verschaltet, wie sie beispielsweise in Fig. 6c erläutert wurden. Entsprechend zu dem Ausführungsbeispiel gemäß Fig. 7a und 7b ist durch Verschalten des Transformators 602c mit den durch die komplexen Widerstände 614 gebildeten Spannungsteiler der jeweiligen Leitungen ein Common-Mode-Übertragungskanal gebildet. Die weitere Verarbeitung der xDSL-Signale kann entsprechend zu den Ausführungsbeispielen gemäß 7a und 7b erfolgen. Die an den Transformatoren 816 abgegriffen Signale erster Art sind mit bekannten Schaltungen zur Sprachsignal- bzw. ISDN-Signalübertragung verschaltet, um empfangene Signale an einen Benutzer weiterzuleiten oder von einem Benutzer empfangene Signale zur Übertragung auf den Leitungen 118 und 510 aufzubereiten.

Fig. 8b und 8c zeigen ein Ausführungsbeispiel des Splitters 810. Fig. 8b zeigt den Splitter als Blockschaltbild, wie es in Fig. 8a dargestellt ist, und Fig. 8c zeigt eine beispielhafte Implementierung des Tiefpassfilters 812 und des Hochpassfilters 814. Wie in Fig. 8c zu erkennen ist, ist bei diesem Ausführungsbeispiel das Hochpassfilter durch Kondensatoren 818 realisiert, die seriell mit den Leitern der Leitungen 118 bzw. 510 verschaltet sind. Ferner ist das Tiefpassfilter 812 gemäß Fig. 8c durch Spulen 820 realisiert, die jeweils an Knotenpunkten 824 mit den jeweiligen Leitungen, d. h. beispielsweise den Leitungen 118 und 510, verschaltet sind.

Fig. 9 zeigt ein weiteres Ausführungsbeispiel, bei dem die Koppelschaltungen derart realisiert sind, dass eine Fernspeisung eines Gleichstroms mittels einer Gleichspannungsquelle ermöglicht ist. Hierzu sind bei dem in Fig. 9 gezeigten Kommunikationssystem 900 an einem ersten Ende der Leitungen 118 und 510 und an einem zweiten Ende der Leitungen 118 und 510 Übertrager 912a - 912c angeordnet. Die Übertrager 910a -910c weisen jeweils eine erste Spule auf, die entsprechend zu vorhergehenden Ausführungsbeispielen über Widerstände 506 mit Spannungsquellen 306a - 306c verschaltet sind, um Sendesignale U₀₁ - U₀₃ in die jeweiligen Differenzschaltungskanäle und den Common-Mode-Kanal einzuspeisen. In entsprechender Weise weisen die Übertrager 912a - 912c eine zweite Spule auf, die entsprechend zu vorherigen Ausführungsbeispielen mit den Widerständen 318 zum Erzeugen der Empfangsspannungssignale U₁ bis U₃ verschaltet sind. Die Übertrager 910a bis 910c und 912a bis 912c weisen jeweils eine zweite Spule auf, die aus jeweils 2 Teilspulen gebildet sind, die galvanisch durch einen Kondensator 914 getrennt sind. Entsprechend zu vorhergehenden Ausführungsbeispielen weist das in Fig. 9 gezeigte Kommunikationssystem 900 eine Reihenschaltung aus den komplexen Widerständen 614 bzw. komplexen Widerstandsnetzwerken 614 auf, wobei Außenanschlüsse der jeweiligen Teilspulen mit einem Knotenpunkt zwischen jeweiligen komplexen Widerständen 614 einer entsprechenden Reihenschaltung verschaltet sind. Das Kommunikationssystem 900 weist eine Gleichspannungsquelle 916 auf, die jeweils über Widerstände 918 mit den Leitern der Leitung 510 verschaltet ist. Bei einem Ausführungsbeispiel stellt die Leitung 510 die a/b-Aderleitung einer Teilnehmeranschlussleitung dar, auf der der Speisestrom für den Teilnehmer eingekoppelt und übertragen wird. Um eine störende Beeinflussung der Übertragung der digitalen Daten, beispielsweise der xDSL-Datenübertragung, zu vermeiden, sind die mit den Leitungen verschalteten zweiten Spulen der Übertrager 910a - 910c und die mit den Leitungen verschalteten Teilspulen der ersten Spulen der Übertrager 912a - 912c entkoppelt. Die Entkoppelung erfolgt hierbei, wie in Fig. 9 gezeigt, an den leitungsseitigen zweiten Spulen an der Verbindung der beiden Mittelanschlüsse der jeweiligen Übertrager. Die komplexen Widerstandsnetzwerke 614 zum Einkoppeln der Sendesignale des Common-Mode-Kanals stellen hierbei ebenfalls durch die geeignete Beschaltung mit Kapazitäten eine Entkoppelung der beiden elektrischen Leiter der Leitung 510 und daher eine Entkopplung der Signalübertragung von dem Speisestrom sicher. In entsprechender Weise weist das Kommunikationssystem 900 an dem zweiten Ende 2 Spulen 920 auf, die als Tiefpassfilter wirken und ein Auskoppeln des Speisestroms ermöglichen, der einer entsprechenden Vorrichtung 922, wie beispielsweise einer Stromversorgungsschaltung eines Telefons, zugeführt wird.

Die oben beschriebenen Ausführungsbeispiele stellen exemplarische Ausführungsbeispiele dar, wobei Elemente und Vorrichtungen der unterschiedlichen Ausführungsbeispiele miteinander kombinierbar sind. Beispielsweise können die Kopplungsschaltungen zum Einkoppeln und Auskoppeln der Sendesignale der Common-Mode-Kanäle und der Differenzschaltungskanäle durch andere Kopplungsschaltungen, wie sie in anderen Ausführungsbeispielen beschrieben sind, ersetzt werden. In entsprechender Weise kann auch eine weitere Signalverarbeitung, wie Sie bei einem oder mehreren Ausführungsbeispielen beschrieben ist, auf andere Ausführungsbeispiele angewendet werden.

Ferner ist zu bemerken, dass die in den verschiedenen Ausführungsbeispielen beschriebenen Verschaltungen oder Kopplungen zwischen Vorrichtungen oder Elementen der Kommunikationssysteme bzw. der Sender und Empfänger weitere nicht gezeigte Bauelemente oder funktionelle Schaltungen umfassen können, um beispielsweise eine Aufbereitung der Signale mittels Filter oder sonstige Verarbeitungen durchzuführen.

## Patentansprüche

1. Verfahren zur Datenübertragung über ein Datenkommunikationssystem aufweisend:
Erzeugen (200) eines ersten elektrischen Signals auf einem ersten elektrischen Leiter (118a) des Datenkommunikationssystems und eines zweiten elektrischen Signals auf einem zweiten elektrischen Leiter (118b) des Datenkommunikationssystems, derart, dass die Common-Mode-Spannung des ersten und zweiten elektrischen Signals von einem ersten digitalen Sendesignal abhängig ist;
Übertragen (210) des ersten und zweiten elektrischen Signals über den ersten und zweiten elektrischen Leiter; und
Erzeugen (230) eines ersten digitalen Empfangssignals basierend auf einer erfassten Common-Mode-Spannung des ersten und zweiten elektrischen Signals.

2. Verfahren nach Anspruch 1, wobei das Erzeugen des ersten und zweiten elektrischen Signals ferner abhängig von einem zweiten digitalen Sendesignal erfolgt, derart, dass eine Differenzspannung des ersten und zweiten elektrischen Signals abhängig von dem zweiten digitalen Sendesignal ist und wobei das Verfahren ferner ein Erzeugen eines zweiten digitalen Empfangssignals abhängig von einer erfassten Differenzspannung des ersten und zweiten elektrischen Signals aufweist.

3. Verfahren nach Anspruch 1 oder 2, wobei das Verfahren ferner aufweist:
Erzeugen eines dritten elektrischen Signals auf dem ersten elektrischen Leiter (118a) und eines vierten elektrischen Signals auf dem zweiten elektrischen Leiter (118b), derart, dass eine Differenzspannung zwischen dem dritten und vierten elektrischen Signal abhängig von einem dritten digitalen Sendesignal ist;
Übertragen des dritten und vierten elektrischen Signals über den ersten (118a) und zweiten (118b) elektrischen Leiter, wobei das dritte und vierte elektrische Signal in einer Übertragungsrichtung übertragen werden, die entgegengesetzt zu der Übertragungsrichtung des ersten und zweiten Signals ist;
Erzeugen eines dritten digitalen Empfangssignals basierend auf einer erfassten Differenzspannung des dritten und vierten elektrischen Signals.

4. Verfahren nach Anspruch 3, wobei das dritte und vierte elektrische Signal ferner derart erzeugt wird, dass eine Common-Mode-Spannung des dritten und vierten elektrischen Signals von einem vierten digitalen Sendesignal abhängig ist, und wobei das Verfahren ein Erzeugen eines vierten digitalen Empfangssignals basierend auf einer erfassten Common-Mode-Spannung des dritten und vierten elektrischen Signals aufweist.

5. Verfahren nach Anspruch 3 oder 4, wobei das erste und zweite elektrische Signal und das dritte und vierte elektrische Signal zeitgleich auf dem ersten (118a) und zweiten (118b) elektrischen Leiter übertragen werden.

6. Verfahren nach einem der Ansprüche 1 bis 5, wobei das Verfahren ferner umfasst:
Erzeugen eines fünften elektrischen Signals auf einem dritten elektrischen Leiter (510a) und eines sechsten elektrischen Signals auf einem vierten elektrischen Leiter (510b) des Datenkommunikationssystems, derart, dass eine Common-Mode-Spannung des fünften und sechsten elektrischen Signals von dem ersten digitalen Sendesignal abhängt;
Übertragen des fünften elektrischen Signals über den dritten elektrischen Leiter (510a) und des sechsten elektrischen Signals über den vierten elektrischen Leiter (510b);
wobei das Erzeugen des ersten digitalen Empfangssignals ein Erzeugen des ersten digitalen Empfangssignals basierend auf der erfassten Common-Mode-Spannung des ersten und zweiten elektrischen Signals und einer erfassten Common-Mode-Spannung des fünften und sechsten Signals umfasst.

7. Verfahren nach Anspruch 6, wobei das Erzeugen des ersten digitalen Empfangssignals ein Erzeugen des ersten digitalen Empfangssignals basierend auf einer Differenz der erfassten Common-Mode-Spannung des ersten und zweiten elektrischen Signals und der erfassten Common-Mode-Spannung des fünften und sechsten elektrischen Signals umfasst.

8. Verfahren nach Anspruch 6 oder 7, wobei das Verfahren ferner aufweist:
Erzeugen des fünften und sechsten elektrischen Signals derart, dass eine Differenzspannung des fünften und sechsten elektrischen Signals von einem fünften digitalen Sendesignal abhängig ist;
Erzeugen eines fünften digitalen Empfangssignals abhängig von einer erfassten Differenzspannung des fünften und sechsten elektrischen Signals.

9. Verfahren nach einem der Ansprüche 1 bis 8, wobei das Erzeugen eines ersten und zweiten elektrischen Signals ferner in Abhängigkeit eines sechsten digitalen Sendesignals erfolgt, derart, dass die Common-Mode-Spannung des ersten und zweiten elektrischen Signals abhängig von dem ersten und sechsten digitalen Sendesignal ist.

10. Verfahren nach Anspruch 9, wobei das Verfahren ferner umfasst:
Erzeugen eines siebten elektrischen Signals auf einem fünften elektrischen Leiter (512a) und eines achten elektrischen Signals auf einem sechsten elektrischen Leiter (512b), derart, dass die Common-Mode-Spannung des siebten und achten elektrischen Signals von dem sechsten digitalen Sendesignal abhängig ist.

11. Verfahren nach einem der Ansprüche 1 bis 10, bei dem das Datenkommunikationssystem ein xDSL- oder ein LAN-Datenkommunikationssystem ist.

12. Verfahren nach einem der Ansprüche 6 bis 11, wobei das Kommunikationssystem zusätzlich zu den ersten bis vierten elektrischen Leitern eine Mehrzahl weiterer elektrischer Leiter aufweist, wobei eine Mehrzahl weiterer elektrischer Signale auf der Mehrzahl von weiteren elektrischen Leitern erzeugt wird, derart, dass ein auf jeweils einem Paar der Mehrzahl von elektrischen Leitern erzeugtes Differenzspannungssignal der elektrischen Signale des jeweiligen Paars von einem einer Mehrzahl weiterer digitaler Sendesignale abhängig ist, und eine Common-Mode-Spannung des jeweiligen Paars von einem weiteren der Mehrzahl von weiteren digitalen Sendesignale abhängig ist.

13. Verfahren nach einem der Ansprüche 1 bis 12, wobei das Erzeugen des ersten und zweiten elektrischen Signals ein Codieren des digitalen Sendesignals zu Symbolen, die vorbestimmten Signalfrequenzen zugeordnet sind, und ein Frequenz-Zeit-Umwandeln basierend auf den codierten Symbolen umfasst.

14. Verfahren nach einem der Ansprüche 1 bis 13, wobei die Common-Mode-Spannung des ersten und zweiten elektrischen Signals mittels eines ersten und zweiten komplexen Widerstands erzeugt wird.

15. Verfahren nach Anspruch 14, wobei die Common-Mode-Spannung des ersten und zweiten elektrischen Signals durch das Abfallen einer Spannung an einem ersten und zweiten ohmschen Widerstand erzeugt wird.

16. Verfahren nach einem der Ansprüche 1 bis 15, wobei das digitale Sendesignal eine Bandbreite größer als 100 kBit/s aufweist.

17. Verfahren nach einem der Ansprüche 1 bis 16, wobei das Erzeugen eines digitalen Empfangssignals ein Kompensieren von Störungen umfasst, die durch Übersprechen von Leitern des Kommunikationssystems auf den ersten und zweiten elektrischen Leiter hervorgerufen werden.

18. Datenkommunikationssender zum Senden von digitalen Signalen über ein Datenkommunikationssystem aufweisend:
einen ersten Eingang (112), um ein erstes Sendesignal zu empfangen, das auf einem ersten digitalen Signal basiert;
einen ersten Anschluss (116a), der mit einem ersten elektrischen Leiter (118a) des Datenkommunikationssystems koppelbar ist, um ein erstes elektrisches Signal auf dem ersten elektrischen Leiter (118a) auszugeben;
einen zweiten Anschluss (116b), der mit einem zweiten elektrischen Leiter (118b) des Datenkommunikationssystems koppelbar ist, um ein zweites elektrisches Signal auf dem zweiten elektrischen Leiter (118b) auszugeben;
einer Koppelschaltung (114), die mit dem ersten Eingang (112) und dem ersten (116a) und zweiten (116b) Anschluss verschaltet ist, um das erste und zweite elektrische Signal an dem ersten (116a) und zweiten (116b) Anschluss mit einer Common-Mode-Spannung zu erzeugen, die abhängig von dem ersten Sendesignal ist.

19. Datenkommunikationssender nach Anspruch 18, wobei der Datenkommunikationssender einen Digital-Analog-Wandler (716) aufweist, der mit dem ersten Eingang (118) verkoppelt ist, um das erste digitale Signal in ein analoges erstes Sendesignal umzuwandeln.

20. Datenkommunikationssender nach Anspruch 18 oder 19, wobei die Koppelschaltung derart mit dem ersten (116a) und zweiten (116b) Anschluss verschaltet ist, dass der erste Anschluss (116a) galvanisch von dem zweiten Anschluss (116b) getrennt ist.

21. Datenkommunikationssender nach einem der Ansprüche 18 bis 20, wobei die Koppelschaltung eine Reihenschaltung mit einem ersten komplexen Widerstand (614), der mit dem ersten Anschluss (116a) verschaltet ist, und einem zweiten komplexen Widerstand (614) aufweist, der mit dem zweiten Anschluss (116b) verschaltet ist.

22. Datenkommunikationssender nach Anspruch 21, wobei die Reihenschaltung einen Spannungsteiler mit einem ersten ohmschen Widerstand, der mit dem ersten Anschluss verschaltet ist, und einem zweiten ohmschen Widerstand, der mit dem zweiten Anschluss verschaltet ist, umfasst.

23. Datenkommunikationssender nach Anspruch 21 oder 22, wobei der Anschluss zum Einspeisen der Common-Mode-Spannung ein Knoten zwischen dem ersten und zweiten komplexen Widerstand (614) ist.

24. Datenkommunikationssender nach einem der Ansprüche 21 bis 23, wobei die Koppelschaltung einen Übertrager (502a) mit einer ersten Spule und einer zweiten Spule mit einem ersten und zweiten Außenanschluss umfasst, wobei der erste Außenanschluss der zweiten Spule mit dem ersten Anschluss (116a) und der zweite Außenanschluss der zweiten Spule mit dem zweiten Anschluss (116b) verschaltet ist und die zweite Spule parallel mit der Reihenschaltung verschaltet ist.

25. Datenkommunikationssender nach einem der Ansprüche 18 bis 20, wobei die Koppelschaltung einen Übertrager (502a) mit einer ersten Spule und einer zweiten Spule mit einem ersten und zweiten Außenanschluss und einem Mittelanschluss umfasst, wobei der erste Außenanschluss der zweiten Spule mit dem ersten Anschluss und der zweite Außenanschluss der zweiten Spule mit dem zweiten Anschluss verschaltet ist und wobei der Mittelanschluss der zweiten Spule der Anschluss zum Einspeisen der Common-Mode-Spannung ist.

26. Datenkommunikationssender nach Anspruch 18 bis 24, wobei die Koppelschaltung einen Übertrager (502b) mit einer ersten Spule und einer zweiten Spule aufweist, wobei die zweite Spule eine erste und zweite Teilspule aufweist, wobei die erste und zweite Teilspule an jeweils einem ersten Spulenanschluss über einen Kondensator miteinander verkoppelt sind, und wobei ein zweiter Spulenanschluss der ersten Teilspule mit dem ersten Anschluss und ein zweiter Spulenanschluss der zweiten Teilspule mit dem zweiten Anschluss verkoppelt ist.

27. Datenkommunikationssender nach einem der Ansprüche 18 bis 26, wobei der erste und zweite Anschluss galvanisch mit einer Stromversorgung (916) verkoppelt ist, um an dem ersten und zweiten Anschluss einen Fernspeisungsstrom einzuspeisen.

28. Datenkommunikationssender nach einem der Ansprüche 18 bis 27, der ferner einen zweiten Eingang aufweist, um ein zweites Sendesignal, das auf einem zweiten digitalen Signal basiert, zu empfangen, wobei die Koppelschaltung mit dem zweiten Eingang verkoppelt ist, um eine Differenzspannung auf dem ersten und zweiten Anschluss in Abhängigkeit von dem zweiten Sendesignal zu erzeugen.

29. Datenkommunikationssender nach einem der Ansprüche 18 bis 28, wobei der Datenkommunikationssender einen dritten Anschluss aufweist, der mit einem dritten elektrischen Leiter des Datenkommunikationssystems koppelbar ist, um ein drittes elektrisches Signal auf dem dritten elektrischen Leiter auszugeben, und einen vierten Anschluss aufweist, der mit einem vierten elektrischen Leiter des Datenkommunikationssystems koppelbar ist, um ein viertes elektrisches Signal auf dem vierten elektrischen Leiter zu erzeugen, derart, dass die Common-Mode-Spannung des ersten und zweiten elektrischen Signals und die Common-Mode-Spannung des dritten und vierten elektrischen Signals von dem ersten Sendesignal abhängig sind.

30. Datenkommunikationssender nach Anspruch 29, der ferner einen dritten Eingang aufweist, um ein drittes Sendesignal, das auf einem dritten digitalen Signal basiert, zu empfangen, wobei die Koppelschaltung mit dem dritten Eingang verkoppelt ist, um das dritte und vierte elektrische Signal mit einer Differenzspannung zu erzeugen, die von dem dritten Sendesignal abhängig ist.

31. Datenkommunikationssender nach einem der Ansprüche 18 bis 30, mit ferner folgenden Merkmalen:
zumindest einem weiteren Eingang, um zumindest ein weiteres Sendesignal, das auf zumindest einem weiteren digitalen Signal basiert, zu empfangen;
zumindest einem weiteren Paar von Anschlüssen, wobei das zumindest eine weitere Paar von Anschlüssen mit zumindest einem weiteren Paar von elektrischen Leitern verkoppelbar ist, um an einem ersten elektrischen Leiter des zumindest einen weiteren Paars ein erstes weiteres elektrisches Signal und an einem zweiten elektrischen Leiter des zumindest einen weiteren Paars ein zweites weiteres elektrisches Signal auszugeben, und wobei die Koppelschaltung mit dem zumindest einen weiteren ersten Eingang und dem zumindest einen weiteren Paar von Anschlüssen verkoppelt ist, um eine Common-Mode-Spannung des zumindest einen ersten weiteren und zweiten weiteren elektrischen Signals an dem Paar von Anschlüssen abhängig von dem zumindest einen weiteren Sendesignal zu erzeugen.

32. Datenkommunikationsempfänger mit folgenden Merkmalen:
einem ersten Anschluss (122a), um den Datenkommunikationsempfänger mit einem ersten elektrischen Leiter (118a) eines Datenkommunikationssystems zu verkoppeln;
einem zweiten Anschluss, um den Datenkommunikationsempfänger mit einem zweiten elektrischen Leiter (118b) des Datenkommunikationssystems zu verkoppeln;
einer ersten Schaltung (124), die mit dem ersten und zweiten Anschluss verkoppelt ist, um eine Common-Mode-Spannung an dem ersten und zweiten Anschluss abzugreifen;
einem Wandler (126), der mit der ersten Schaltung verkoppelt ist, um ein erstes digitales Empfangssignals basierend auf der abgegriffenen Common-Mode-Spannung zu erzeugen.

33. Datenkommunikationsempfänger nach Anspruch 32, mit ferner folgenden Merkmalen:
einer zweiten Schaltung, die mit dem ersten und zweiten Anschluss verkoppelt ist, um ein Differenzspannungssignal zwischen dem ersten (118a) und zweiten (116b) elektrischen Leiter abzugreifen; und
wobei der Wandler ferner mit der zweiten Schaltung verkoppelt ist, um ein zweites digitales Empfangssignal basierend auf dem Differenzspannungssignal zwischen dem ersten (118a) und zweiten (118b) elektrischen Leiter zu erzeugen.

34. Datenkommunikationsempfänger nach einem der Ansprüche 32 oder 33, wobei der Datenkommunikationsempfänger ferner folgende Merkmale aufweist:
einen dritten Anschluss, der mit einem dritten elektrischen Leiter (510a) des Datenkommunikationssystems koppelbar ist, um zumindest ein drittes elektrisches Signal zu empfangen,
einen vierten Anschluss, der mit einem vierten elektrischen Leiter (510b) des Datenkommunikationssystems koppelbar ist, um ein viertes elektrisches Signal zu empfangen;
eine dritte Schaltung, die mit dem dritten und vierten Anschluss verkoppelt ist, um eine an dem dritten und vierten Anschluss
anliegende zweite Common-Mode-Spannung abzugreifen; und
wobei der Wandler mit der dritten Schaltung verkoppelt ist, um das erste digitales Empfangssignal basierend auf der an dem ersten (122a) und zweiten (122b) Anschluss anliegenden Common-Mode-Spannung und der an dem dritten und vierten Anschluss anliegenden Common-Mode-Spannung zu erzeugen.

35. Datenkommunikationsempfänger nach Anspruch 34, wobei der Wandler mit der ersten, zweiten und dritten Schaltung verkoppelt ist, um das erste digitale Empfangssignal basierend auf einer Differenz der an dem ersten und zweiten Anschluss anliegenden Common-Mode-Spannung und der an dem dritten und vierten Anschluss anliegenden Common-Mode-Spannung zu erzeugen.

36. Datenkommunikationsempfänger nach Anspruch 34 oder 35,
wobei der Wandler eine vierte Schaltung aufweist, die mit dem dritten und vierten Anschluss verkoppelt ist, um eine Differenzspannung zwischen dem dritten (510a) und vierten (510b) elektrischen Leiter abzugreifen; und
wobei der Wandler ferner mit der vierten Schaltung verkoppelt ist, um ein drittes digitales Empfangssignal basierend auf dem Differenzspannungssignal zwischen dem ersten (118a) und zweiten (118b) elektrischen Leiter zu erzeugen.

37. Datenkommunikationsempfänger nach einem der Ansprüche 32 bis 36, wobei der Datenkommunikationsempfänger als ein xDSL-Empfänger oder ein Ethernet-Empfänger ausgebildet ist.

38. Datenkommunikationsempfänger nach einem der Ansprüche 32 bis 37, wobei die erste Schaltung eine Reihenschaltung mit einem ersten komplexen Widerstand (614), der mit dem ersten Anschluss verschaltet ist, und einem zweiten komplexen Widerstand (614) aufweist, der mit dem zweiten Anschluss verschaltet ist.

39. Datenkommunikationsempfänger nach Anspruch 38, wobei die Reihenschaltung einen Spannungsteiler mit einem ersten ohmschen Widerstand, der mit dem ersten Anschluss verschaltet ist, und einem zweiten ohmschen Widerstand aufweist, der mit dem zweiten Anschluss verschaltet ist.

40. Datenkommunikationsempfänger nach Anspruch 38, wobei ein Knoten zwischen dem ersten und zweiten komplexen Widerstand mit dem Wandler verkoppelt ist.

41. Datenkommunikationsempfänger nach Anspruch 32 bis 39, wobei die erste Schaltung einen Übertrager (508b) mit einer ersten Spule mit einem ersten und zweiten Außenanschluss und einer zweiten Spule umfasst, wobei der erste Außenanschluss der ersten Spule mit dem ersten Anschluss und der zweite Außenanschluss der ersten Spule mit dem zweiten Anschluss verschaltet ist.

42. Datenkommunikationsempfänger nach Anspruch 41, wobei die erste Spule einen Mittelanschluss aufweist, der mit dem Wandler verkoppelt ist.

43. Datenkommunikationsempfänger nach einem der Ansprüche 32 bis 42, mit ferner folgenden Merkmalen:
zumindest einem weiteren Paar von Anschlüssen, wobei das zumindest eine weitere Paar von Anschlüssen mit zumindest einem weiteren Paar von elektrischen Leitern (512a, 512b) verkoppelbar ist, um an einem ersten elektrischen Leiter (512a) des zumindest einen weiteren Paars von elektrischen Leitern ein erstes weiteres elektrisches Signal und an einem zweiten elektrischen Leiter (512b) des zumindest einen weiteren Paars von elektrischen Leitern ein zweites weiteres elektrisches Signal zu empfangen, und
zumindest einer ersten weiteren Schaltung, um zumindest eine weitere Common-Mode-Spannung des zumindest einen ersten und zweiten weiteren elektrischen Signals an dem zumindest einen weiteren Paar von Anschlüssen zu erfassen; und
zumindest einer zweiten weiteren Schaltung, um zumindest eine weitere Differenzspannung des zumindest einen ersten und zweiten weiteren elektrischen Signals an dem zumindest einen weiteren Paar von Anschlüssen zu erfassen;
und wobei der Wandler mit der zumindest einen ersten weiteren Schaltung und der zumindest einen zweiten weiteren Schaltung verkoppelt ist, um zumindest ein erstes weiteres digitales Signal abhängig von der zumindest einen weiteren Differenzspannung und zumindest ein zweites weiteres digitales Signal abhängig von der zumindest einen weiteren Common-Mode-Spannung zu erzeugen.

44. Datenkommunikationssystem aufweisend:
einen ersten Datenübertragungskanal, der durch eine erste Phantomschaltung eines ersten Paars (118a, 118b) und eines zweiten Paars (510a, 510b) von elektrischen Leitern gebildet ist;
einen zweiten Datenübertragungskanal, der durch eine Differenzschaltung des ersten Paares (118a, 118b) von elektrischen Leitern gebildet ist; und
einen dritten Datenübertragungskanal, der durch eine Differenzschaltung des zweiten Paares (510a, 510b) von elektrischen Leitern gebildet ist.

45. Datenkommunikationssystem nach Anspruch 44, wobei die erste Phantomschaltung durch Differenzverschaltung von Common-Mode-Abgriffen des ersten (118a, 118b) und zweiten (510a, 510b) Paars an ersten und zweiten Enden der jeweiligen elektrischen Leitern gebildet ist.

46. Datenkommunikationssystem nach Anspruch 44 oder 45, wobei das Datenkommunikationssystem einen vierten Datenübertragungskanal aufweist, der durch eine Phantomschaltung zweiter Ordnung gebildet ist, die durch Differenzverschaltung von Common-Mode-Abgriffen der ersten Phantomschaltung mit Common-Mode-Abgriffen eines dritten Paars (512a, 512b) von elektrischen Leitern an ersten und zweiten Enden der elektrischen Leiter gebildet ist.

47. Datenkommunikationssystem nach Anspruch 44 oder 45, wobei das Datenkommunikationssystem einen vierten Datenübertragungskanal aufweist, der durch eine zweite Phantomschaltung eines dritten Paares (512a, 512b)und eines vierten Paares (618)von elektrischen Leitern gebildet ist, und wobei das Datenkommunikationssystem ferner einen fünften Datenübertragungskanal aufweist, der durch eine Phantomschaltung zweiter Ordnung gebildet ist, die durch Differenzverschaltung der ersten Phantomschaltung mit der zweiten Phantomschaltung an ersten und zweiten Enden der elektrischen Leitern gebildet ist.

48. Datenkommunikationssystem, nach einem der Ansprüche 44 bis 47, wobei das Datenkommunikationssystem ein xDSL- oder ein Ethernet-Datenkommunikationssystem ist.
